# EUROPEAN PATENT APPLICATION

(11) **EP 1 724 638 A1**
(43) Date of publication of application: **22.11.2006**
(21) Application number: 06010382.7
(22) Date of filing: 19.05.2006
(51) Int. Cl.: G03D 15/00

(54) **Packing apparatus, print producing apparatus using the same, and packing method**

(30) Priority: 19.05.2005 JP 2005147104; 19.05.2005 JP 2005147103; 19.05.2005 JP 2005147119; 19.05.2005 JP 2005147120; 30.05.2005 JP 2005157464
(71) Applicant: Fuji Photo Film Co., Ltd., Minami-Ashigara-shi, Kanagawa (JP)
(72) Inventor: Tsuji, Junichi c/o Fuji Photo Film Co., Ltd., Ashigara-kami-gun Kanagawa (JP)
(74) Representative: Klunker . Schmitt-Nilson . Hirsch

(57) **Abstract**

A packing apparatus (20) for packing prints (P) for each order includes an accumulating unit (56) for accumulating the prints having been output while regulating positions of the prints in a direction orthogonal to a transport direction to form a print stack of the prints to be packed for each order and horizontally transporting the print stack, an input unit (60) for transporting the print stack in a downwardly inclined direction and inputting the print stack in a packing material (12) and a sealing device (66) for sealing the packing material accommodating the print stack. A print producing apparatus (10) includes an image forming apparatus (30) for forming an image on a recording medium (A) to produce prints (P) and the packing apparatus (20).

## Description

### BACKGROUND OF THE INVENTION

The present invention relates to a packing apparatus, a print producing apparatus using the packing apparatus, and a packing method. To be more specific, the present invention relates to a packing apparatus and a packing method of combining prints such as photographic prints for each order to form a print bundle, and packing the bundle in a bag, and a print producing apparatus of producing photographic prints or the like, and packing the prints in a bag using a packing apparatus to produce a packed print (print pack).

Along with the spread of a personal computer (hereinafter, referred to as a "PC"), a personal digital assistance (PDA), and the like, a digital camera is becoming widespread. A mobile telephone having a photographing function has also become popular.

An image photographed with a digital camera, a mobile telephone, or the like is generally handled as image data to be used for various kinds of applications. For example, an image is taken in and processed by a PC or the like to be used for creating a homepage, a New Year's card, and the like, to be displayed on a display of a PC or the like for appreciation, and to be output by a household printer. However, there is also a strong demand for keeping an image photographed with a digital camera or the like as a high-quality (photographic) print. In order to satisfy this demand, recently, a dedicated store such as a laboratory produces prints from images photographed by a digital camera, a mobile telephone, or the like.

In the case of ordering print production of images photographed by a digital camera or the like to a print store, the order for print production is placed to the print store, using a print order receiver (hereinafter, referred to as a "receiver") set at a laboratory or various kinds of commercial facilities.

Generally, when a recording medium such as a memory card, an IC card, or a CD-R storing photographed images (image data) is loaded in the receiver, or when a digital camera or a mobile telephone is connected to the receiver directly or via connection means, the receiver reads the images, and displays them on a display together with an order screen.

A customer inputs order information such as images to be printed, print sizes, and the number of prints per image, using a display with a touch panel and a predetermined input method. When the order is confirmed, and an output instruction is issued, the images and the order information are correlated with each other to be sent to a server or an image processor at a laboratory, for example. Then, the images are supplied to a digital photo printer, and prints are produced and outputted in accordance with the order information.

Furthermore, so-called Internet order has recently been performed. In the Internet order, a PC at home is allowed to function as a receiver by installing photograph ordering software, browsing a homepage of a laboratory, or the like, using communication means such as the Internet, and images and order information are sent to the laboratory or the like by the communication means to order print production.

In print production from a conventional photographic film, when a print production order is placed at a laboratory or the like, the name, contact information (address, telephone number, etc.) and the like of a customer (print orderer) are recorded on a dedicated bag called DP bag, and a photographic film (Patrone, cartridge, etc.) is put in the DP bag. When print production is performed, the photographic film is taken out from the DP bag for development, and (finished photographic) prints are produced using the developed film. Then, a bundle of the prints and the developed film are put in the corresponding DP bag, and returned to the customer.

On the other hand, in print production from images photographed with a digital camera or the like, there is no photographic film. Therefore, the operation at a time of delivery becomes simple, and the steps from the production to packing of prints are automated, with the result that a print pack (obtained by storing the prints in a packing material in a bag shape) can be provided to a customer.

For example, JP 2003-35938 A (hereinafter, referred to as "Patent Document 1 ") discloses a digital photo printer (photograph processor). The digital photo printer includes an order information storage unit for storing order information, a storage unit for storing image data to be used for producing (photographic) prints, an image exposure unit for exposing a photosensitive material based on the image data, an order information control unit for converting the order information into image data and sending it to the image exposure unit so as to produce an order information print by exposing the photosensitive material, and print receiving means for storing a bundle of prints and the order information print in a print storage bag. Alternatively, the photo printer further includes a mechanism for closing the print storage bag containing the order information print and a predetermined number of prints.

### SUMMARY OF THE INVENTION

In production of the above-mentioned print pack, various kinds of methods are available as methods of storing a bundle of prints in a bag-shaped packing material, and include a method of packing a bundle of prints with a sheet-shaped packing material to form a bag, and a method of pushing the bundle of prints in the bag-shaped packing material, using a guide member, a transport member, or the like. Above all, possibly employed as one of methods for implementing a low-cost apparatus with a simplified structure is a method of storing prints in a packing material by accumulating the prints and inputting the stack (bundle) of the prints into a bag-shaped packing material from an upper direction thereof.

Herein, considering a commercial value, it is not preferable that prints in a print pack be disturbed. To be more specific, it is not preferable to have conditions such as that prints are rotated, the direction of prints changes to a lateral direction, or the like. Furthermore, considering a cost and the like, the use amount of a packing material is preferably minimized. Thus, the size of a bag to be a print pack is preferably decreased in an allowable range, in accordance with the size, maximum number, and the like of prints to be stored.

In view of the above points, in order to reliably store a bundle of prints in a packing material by putting the bundle in a bag-shaped packing material, it is necessary to put the bundle of prints in the packing material under the condition that the prints are stacked neatly without any disturbance. However, an apparatus capable of putting the stacked prints in a bag-shaped packing material reliably and neatly without any disturbance is not known.

An object of the present invention is to provide: a packing apparatus for producing a print pack obtained by combining and storing photographic prints or the like in a bag for each order, followed by sealing, in which the stack of prints can be put in a packing material neatly without any disturbance, and the prints can be reliably stored in the packing material even with a small bag; a packing method; and a print producing apparatus using the packing apparatus.

In order to achieve the above object, a first aspect of the present invention provides a packing apparatus for packing prints for each order, including:
an accumulating unit for accumulating the prints having been output while regulating positions of the prints in a direction orthogonal to a transport direction to form a print stack of the prints to be packed for each order and horizontally transporting the print stack;
an input unit for transporting the print stack in a downwardly inclined direction and inputting the print stack in a packing material; and
sealing means for sealing the packing material accommodating the print stack.

Here, preferably, the print stack is supplied to the input unit through its transport in the downwardly inclined direction at an angle which is identical to or substantially identical to that at which the print stack is transported in the input unit.

Moreover, preferably, the packing apparatus according to this aspect further including a transport unit for receiving the print stack to transport the print stack to the input unit between the accumulating unit and the input unit,
wherein the transport unit receives the print stack in a horizontal state, is inclined downward at an angle which is identical to or substantially identical to that at which the print stack is transported in the input unit, and transports the print stack in this state, thereby supplying the print stack to the input unit.

Moreover, preferably, at least one of the transport unit and the input unit includes a curl correcting means for pressing the print stack from above in a stack direction, thereby correcting curls of the prints.

Moreover, preferably, the accumulating unit regulates the positions of the prints by sandwiching the prints with guide plates moving in the direction orthogonal to the transport direction every time a predetermined number of prints are output.

Moreover, preferably, the predetermined number of prints is any one selected from the group consisting of 1 to 5.

Further, in order to achieve the above object, a second aspect of the present invention provides a packing apparatus for packing prints for each order, including:
a print accumulating unit including:
   an accumulating platform for accumulating the prints discharged from a print discharge section;
   a pair of regulating members disposed on both sides in a width direction orthogonal to a print discharge direction from the print discharge section of the accumulating platform at an interval larger than a width of the prints and having a height exceeding an accumulation height of the prints accumulated on the accumulating platform;
   bias means for biasing the regulating members to the prints with a force larger than a force for moving a predetermined number of the prints and smaller than a force for changing a shape of accumulated prints, when the regulating members come into contact with ends in the width direction of the prints accumulated on the accumulating platform; and
   drive means for allowing at least one of the regulating members to reciprocate to a position where the prints accumulated on the accumulating platform are sandwiched by the pair of regulating members, every time the predetermined number of the prints are accumulated on the accumulating platform; and
a print insertion unit for transporting the prints of one order to be packed in one packing material to be formed into a print packing bag, accumulated in the print accumulating unit, in a direction orthogonal to the width direction, and inserting the prints in the packing material.

Here, preferably, the drive means drives the pair of regulating members in synchronization so that the pair of regulating members sandwich the prints.

Moreover, preferably, the regulating members are capable of being inclined in a height direction thereof.

Moreover, preferably, the bias means has, at a high position in the height direction, a bias force larger than that at a low position in the height direction.

Moreover, preferably, the bias means has, in a portion for biasing a print stack of a predetermined intended number of the prints, a bias force smaller than a rigidity force in the width direction of the print stack of the intended number of the prints; and
the drive means starts driving the regulating members after the intended number of the prints are accumulated.

Moreover, preferably, the drive means allows the regulating members to reciprocate to a position corresponding to a minimum width when the prints discharged from the print discharge section are deformed in the width direction or a width smaller than the minimum width.

Moreover, preferably, the packing apparatus further including rotation means for rotating a direction of the prints by a predetermined angle before the print are inserted in the packing material.

Further, in order to achieve the above object, the second aspect of the present invention provides a print producing apparatus, including:
an image forming apparatus for forming an image on a recording medium to produce prints; and
any one of the above packing apparatus.

Here, preferably, the image forming apparatus includes:
exposure means for using a photosensitive material as the recording medium and exposing the photosensitive material;
development means for developing the photosensitive material after exposure in a wet method; and
drying means for drying the photosensitive material after development.

Further, in order to achieve the above object, the second aspect of the present invention provides a packing method for packing prints for each order, including:
receiving the prints discharged from a print discharge section on an accumulating platform;
accumulating the prints while regulating positions in a width direction orthogonal to a print discharge direction from the print discharge section of the prints every time a predetermined number of the prints are discharged on the accumulating platform, by biasing the prints from ends on both sides in the width direction with a force larger than a force for moving the predetermined number of the prints and smaller than a force for changing a shape of the accumulated prints; and
transporting the accumulated prints of one order to be packed in one packing material to be formed into a print packing bag in a direction orthogonal to the width direction, and inserting the prints in the packing material.

Here, preferably, a high position of an accumulation height of the prints is biased with a bias force larger than a low position of the accumulation height.

Moreover, preferably, after a predetermined intended number of the prints are accumulated, the bias of the prints is started with a bias force smaller than a rigidity force in the width direction of a stack of the intended number of the prints.

Further, in order to achieve the above object, a third aspect of the present invention provides a packing apparatus for packing prints for each order, including:
transport means for transporting a print stack composed of stacked prints in a downwardly inclined direction to input it in a packing material;
pressing means for, when inputting the print stack in the packing material with the transport means, pressing the print stack from an upstream side in a transport direction at a speed equal to that of the transport means; and
sealing means for sealing the packing material storing the prints,
wherein the transport means transports the print stack in the downwardly inclined direction to input it in the packing material at a speed equal to or higher than a free fall speed of the print stack on the transport means.

Here, preferably, the transport means is a belt conveyer for transporting the print stack placed thereon; and
the pressing means is a pressing member erected on a belt of the belt conveyer.

Moreover, preferably, the transport means inputs the print stack in the packing material at a transport speed of 1 to 2000 mm/sec.

Moreover, preferably, the transport means transports the print stack in the downwardly inclined direction at an angle of 45° to 90° to input it in the packing material.

Further, in order to achieve the above object, a fourth aspect of the present invention provides a packing apparatus for packing prints for each order, including:
transport means for transporting a print stack of the prints in the downwardly inclined direction to put the print stack in a packing material;
a shutter disposed at a lower end of the transport means and having two doors each including a bottom for supporting the print stack from below and a side wall for regulating a position of the print stack in a direction orthogonal to a transport direction when opened, and closing a transport path of the print stack when closed; and
sealing means for sealing the packing material accommodating the print stack,
wherein the shutter opens/closes the doors in a double-doored manner, at least a tip end of the side wall of each door when opened have a shape whose height decreases gradually toward a downstream side in a transport direction, and the tip end of each door is inserted in the packing material when the shutter is opened.

Here, preferably, the tip end of the side wall of each door is tapered, and a taper angle is at least 30°.

Moreover, preferably, an upper end of a tapered region of the tip end of each door is ±15° with respect to a vertical direction when the shutter is opened.

Moreover, preferably, the transport means transports the print stack in the downwardly inclined direction at an angle of 45° to 90° to input the print stack in a packing material.

Further, in order to achieve the above object, a fifth aspect of the present invention provides a packing apparatus for packing prints for each order, including:
holding means for opening a print insertion port of a packing material to be formed into a print packing bag upward, and holding the packing material under a condition that the packing material hangs down;
input means for inputting accumulated prints to be packed in the packing material toward the print insertion port from above the packing material held by the holding means; and
support means for supporting the packing material from below under a condition of lifting up a lower end of the packing material held by the holding means and hanging down, at a time of input of the prints by the input means.

Here, preferably, the packing apparatus according to this aspect further including sealing means for sealing the print insertion port of the packing material.

Moreover, preferably, the support means includes a support platform for supporting the packing material, and inclines the support platform downward after sealing the print insertion port, thereby guiding the packing material in which the prints are packed to a discharge section.

Moreover, preferably, the packing apparatus according to this aspect further including accumulating means for accumulating the prints while regulating positions in a direction orthogonal to a transport direction of the prints and transporting the accumulated prints to the input means after prints of one order to be packed in the packing material are accumulated.

Further, in order to achieve the above object, the fifth aspect of the present invention provides a packing method for packing prints for each order, including:
opening a print insertion port of a packing material to be formed into a print packing bag upward, and holding the packing material under a condition that the packing material hangs down;
supporting the packing material from below under a condition of lifting up a lower end of the packing material held and hanging down; and
inputting accumulated prints to be packed in the packing material toward the print insertion port from above the packing material.

Here, preferably, the print insertion port is sealed after the prints are input.

Moreover, preferably, after the print insertion port is sealed, a support platform for supporting the packing material is inclined downward to guide the packing material in which the prints are packed to a discharge section.

Moreover, preferably, the prints are accumulated while positions in a direction orthogonal to a transport direction of the prints are regulated; and
the accumulated prints are transported to an input position for inputting in the packing material after the prints of one order to be inserted in the packing material are accumulated.

According to the present invention, in the case of producing a print pack obtained by classifying photographic prints or the like for each order, and storing them in a bag-shaped packing material (print packing bag) such as a bag, followed by sealing, the stack (bundle) of prints can be put and inserted reliably in the packing material under the condition that they are stacked neatly without any disturbance. Thus, according to the present invention, even with a small packing material (bag) in accordance with the print size, the maximum storage number, and the like, prints can be stored under the condition of being stacked reliably and neatly.

Furthermore, according to the present invention, the stack (bundle) of prints can be put in a packing material with a simple configuration, and hence, a bundle of prints can be stored under the condition of being stacked reliably and neatly.

In particular, even in the case where prints are curled at a time of being accumulated (e.g., in the case of producing prints using a photosensitive material), the prints can be accumulated with the positions thereof in a direction (width direction) matched with the width direction of the packing material aligned. Therefore, even with a small packing material, prints can be inserted reliably and neatly.

### BRIEF DESCRIPTION OF THE DRAWINGS

In the accompanying drawings:
FIG. 1 is a conceptual view of one example of a printer using a packer that is one embodiment of a packing apparatus according to the present invention;
FIGS. 2A and 2B are a partially enlarged front view and a partially enlarged plan view of the packer shown in FIG. 1, respectively;
FIG. 3 is a schematic perspective view of one example of a packing sheet for packing prints, used in the packer shown in FIG. 1;
FIGS. 4A, 4B, 4C, and 4D are conceptual views showing other examples of ways to align prints in other embodiments of the packing apparatus of the present invention;
FIG. 5 is a conceptual view of another example of a printer that is one embodiment of a print producing apparatus using a packer that is another embodiment of the packing apparatus of the present invention;
FIGS. 6A and 6B are a partially enlarged front view and a partially enlarged plan view of the packer shown in FIG. 5, respectively;
FIGS. 7A and 7B are a plan view and a partial cross-sectional side view showing a schematic configuration of a driving unit of a width shift guide of an accumulating unit of the packer shown in FIGS. 6A and 6B, respectively;
FIGS. 8A and 8B are a partially enlarged front view and a partially enlarged plan view of the packer shown in FIG. 1, respectively;
FIG. 9 is a conceptual view showing another example of a printer that is one embodiment of a print producing apparatus using a packer that is another embodiment of the packing apparatus of the present invention;
FIGS. 10A and 10B are a partially enlarged front view and a partially enlarged plan view of the packer shown in FIG. 9, respectively;
FIG. 11 is a schematic perspective view of a shutter of the packer shown in FIGS. 10A and 10B;
FIG. 12 is a conceptual view illustrating the packer shown in FIG. 9;
FIGS. 13A and 13B are a partially enlarged front view and a partially enlarged plan view of the packer shown in FIG. 5, respectively;
FIG. 14 is a schematic view showing another example of an input unit of the packer shown in FIG. 5;
FIGS. 15A and 15B are a front view and a plan view showing another example of an accumulating unit and an input unit of the packer shown in FIG. 5, respectively;
FIGS. 16A and 16B are front views showing another example of an accumulating unit and an input unit of the packer shown in FIG. 5, respectively;
FIG. 17 is a cross-sectional view illustrating a schematic configuration of one example of a print input load alleviating unit of the packer shown in FIG. 5;
FIGS. 18A to 18C are views respectively illustrating an operation of the print input load alleviating unit; and
FIGS. 19A to 19C are views respectively illustrating an operation of another example of the print input load alleviating unit.

### DETAILED DESCRIPTION OF THE INVENTION

Hereinafter, the packing apparatus according to the present invention, the print producing apparatus and packing method using the packing apparatus will be described in detail, based on preferable examples shown in the attached drawings.

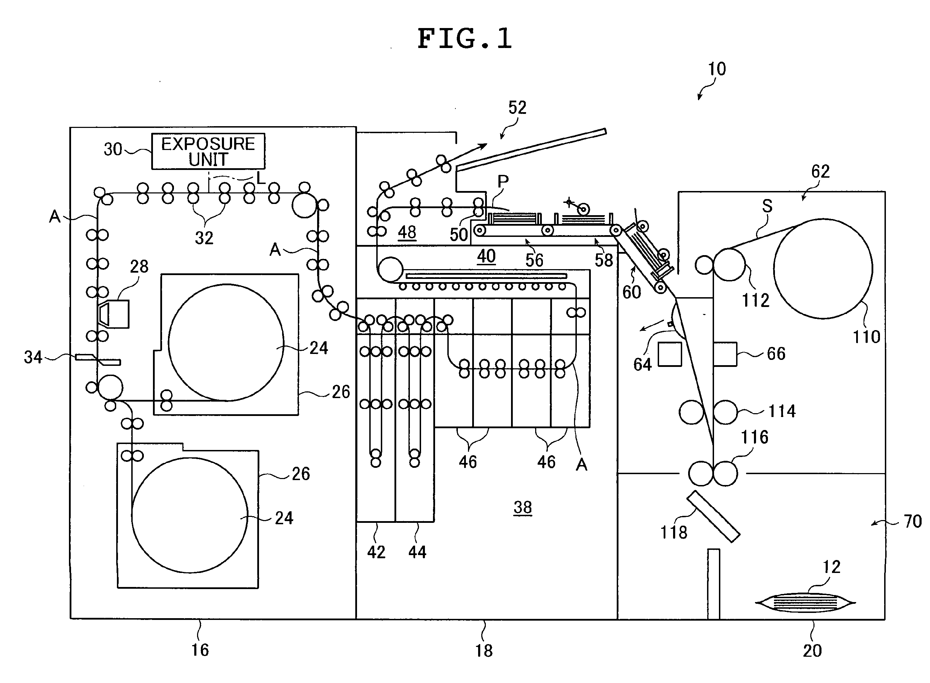

First, a packing apparatus according to the first aspect of the present invention will be described with reference to FIGS. 1 to 4D.

FIG. 1 shows a schematic view of one example of a printer using one embodiment of the packing apparatus of the present invention.

A printer 10 shown in FIG. 1 obtains an image for printing generated by subjecting an image (image data) photographed with a digital camera, a mobile telephone or the like to predetermined processing, or an image for printing generated by photoelectrically reading an image photographed on a photographic film and subjecting the read image to predetermined processing. Then, the printer 10 exposes imagewisely a photosensitive material A (printing paper) to a light beam modulated in accordance with the image for printing to form a latent image. The printer 10 subjects the exposed photosensitive material A to predetermined development processing to obtain (finished photographic) prints P, and further packs the prints P in a bag for each order to obtain a print pack 12.

In the illustrated example, the printer 10 includes an image processor 16 and a processor 18 that function as an image forming apparatus, and a packer 20 that is an example of the packing apparatus of the present invention.

Although not described particularly, the photosensitive material A is transported to each site by known transport means such as a transport roller pair and a guide.

The image processor 16 cuts the photosensitive material A to a size in accordance with a print to be produced, and records a back print on the cut photosensitive material A. Then, the image processor 16 imagewisely exposes the photosensitive material A to a light beam L modulated in accordance with the above-mentioned image for printing (data) to record a latent image, and supplies the exposed photosensitive material A to the processor 18.

In the image processor 16, a magazine 26 for storing a photosensitive material roll 24 formed by winding the photosensitive materials A is loaded at a predetermined position, and furthermore, a back printer 28, an exposure unit 30, and two sub-scanning transport roller pairs 32 are provided.

In the illustrated printer 10, two magazines 26 can be loaded. The photosensitive material A is pulled out of the magazine 26, and cut with a cutter 34 in accordance with a print size. Then, the photosensitive material A has a back print recorded thereon with the back printer 28, and is supplied to the sub-scanning transport roller pairs 32.

On the other hand, the above-mentioned image for printing is supplied to the exposure unit 30.

The exposure unit 30 deflects the light beam L (recording light) modulated in accordance with the image for printing in a main scanning direction (direction orthogonal to the drawing surface in FIG. 1) to make the deflected light beam L be incident on a predetermined exposure position. The photosensitive material A is transported to be scanned in a sub scanning direction orthogonal to the main scanning direction while being positioned at the exposure position by the sub-scanning transport roller pairs 32 that are placed to sandwich the exposure position therebetween in a transport direction. Thus, the photosensitive material A is scanned and exposed two-dimensionally with the light beam L modulated in accordance with the image, with the result that a latent image is recorded over the entire surface of the photosensitive material A.

The processor 18 includes a development unit 38 for developing the photosensitive material A after exposure in a wet method and a drying unit 40.

The photosensitive material A with the latent image formed thereon in the image processor 16 is supplied to the processor 18. In the development unit 38, the latent image is developed in a development tank 42 to be a developed image. The developed image is bleached and fixed in a bleaching/fixing tank 44, washed with water in four water-washing tanks 46, and transported to the drying unit 40.

The developed photosensitive material A is dried with heat, hot air, or the like by a heater in the drying unit 40, and discharged to the packer 20 as (finished photographic) prints P from an output roller pair 50 in a discharge unit 48.

Herein, in the illustrated printer 10, prints P larger than a predetermined size (e.g., prints larger than a postcard) are not transported to the packer 20, and discharged from the discharge unit 48 to a large-size print discharge unit 52 placed above.

The switching of the transport path may be performed by a known method such as a method using a switching guide.

As described above, the prints P are discharged from the output roller pair 50 of the processor 18 to the packer 20.

The packer 20 is the packing apparatus of the present invention for accumulating prints P discharged from the output roller pair 50 of the discharge unit 48 of the processor 18 for each order, and packing them. The packer 20 includes an accumulating unit 56, a transport unit 58, an input unit 60, a packing sheet supply unit 62 for supplying a packing sheet S that is a packing material, opening holding means 64, a seal/cut unit 66, and a product storage unit 70.

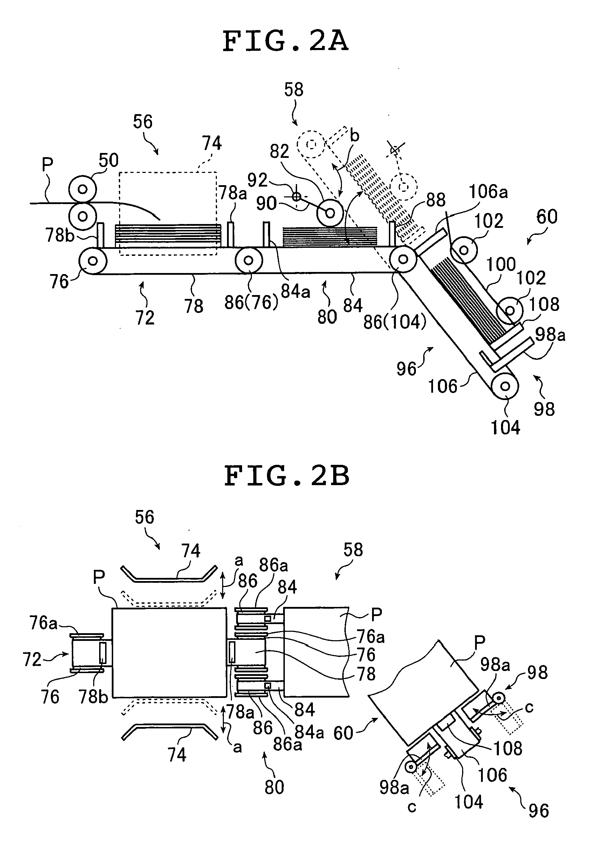

FIGS. 2A and 2B show schematic views of the accumulating unit 56, the transport unit 58, and the input unit 60. FIG. 2A is a front view thereof (view seen from the same direction as that in FIG. 1), and FIG. 2B is a plan view thereof.

The accumulating unit 56 accumulates the prints P discharged from the output roller pair 50, and aligns the prints P in a direction (hereinafter, referred to as a "width direction") orthogonal to the transport direction to transport them to the transport unit 58 on a downstream side.

In the illustrated example, the accumulating unit 56 has a conveyer 72 and width shift guides 74 (represented by a dotted line in FIG. 2A).

The conveyer 72 is a known belt conveyer and includes a pair of rollers 76 and an endless belt 78 stretched across the rollers 76. The conveyer 72 conveys the prints P to the transport unit 58 on a downstream side after the prints P are accumulated thereon. Each of the rollers 76 is axially supported by a support plate 76a (that is omitted for clarity of the configuration in FIG. 2A. This also applies to the other support plates) .

In order that the prints P discharged from the output roller pair 50 are accumulated onto the endless belt 78, the conveyer 72 is placed below the output roller pair 50 in a vertical direction in such a manner that the roller 76 on an upstream side (i.e., an upstream side end of a transport surface of the endless belt 78) is placed at substantially the same position (slightly downstream side in the illustrated example) as that of the output roller pair 50 or a position on an upstream side thereof. Furthermore, the width of the endless belt 78 is smaller than a minimum size in the width direction of the corresponding prints P, with the result that the width shift guides 74 described later are brought into contact with the ends in the width direction of the prints P to reliably perform width shift by the width shift guides 74.

In the conveyer 72 in the accumulating unit 56, in order to prevent the prints P discharged from the output roller pair 50 from traveling to a downstream side from a predetermined position, it is preferable to provide a regulating member 78a such as a protrusion or a wall portion positioned on a downstream side from the discharge position (accumulation position) of the prints P at a time of discharge of the prints P on the surface (outer circumferential surface) of the endless belt 78.

Furthermore, in order for the conveyer 72 to transport the prints P more reliably, it is preferable to provide, on the surface of the endless belt 78, a pressing member 78b such as a protrusion or a wall portion which is positioned on an upstream side from the discharge position (accumulation position of the prints P) of the prints P discharged by the output roller pair 50 at a time of discharge of the prints P.

The width shift guides 74 are a pair of plate-shaped guide members. The plate-shaped guide members are placed with one on each side of the conveyer 72 so as to sandwich the conveyer 72 in the width direction while the guide surfaces thereof being opposed to each other.

A pair of (two) width shift guides 74 reciprocate in synchronization with each other in the direction represented by the arrow a of FIG. 2B by known means using a motor, a solenoid, and the like. Owing to this reciprocation, as represented by a dotted line of FIG. 2B, the width shift guides 74 come into contact with ends in the width direction of the prints P discharged/accumulated onto the conveyer 72 so as to sandwich the prints P from both sides in the width direction, thereby regulating the positions in the width direction of the prints P discharged from the output roller pair 50 (move the prints P in the width direction), and align the accumulated prints P in the width direction (perform width shift).

In the accumulating unit 56, there is no particular limit to the drive timing of the width shift guides 74 (i.e., the timing of aligning the prints P). The drive timing may be determined as follows. When a predetermined number of prints P appropriately set in accordance with the number of the stacked prints P that can be moved are discharged and accumulated, the width shift guides 74 are driven to align the prints P before the subsequent print P is discharged.

It is preferable that the sandwiching force (pressing force) of the width shift guides 74 is smaller, considering the load applied on the prints P. In particular, photographic prints as illustrated have a relatively large surface friction coefficient. Therefore, if too many photographic prints are stacked, a large force is required for width shift. Furthermore, if the width shift is performed for every few prints, the prints can be aligned reliably and neatly.

Considering the above points, in the accumulating unit 56, it is preferable to drive the width shift guides 74 to align the prints P every time the appropriately set number (5 or less) of the prints P are discharged (accumulated). In particular, it is preferable to drive the width shift guides 74 to align the prints P every time two prints are discharged (accumulated), and it is more preferable to drive the width shift guides 74 to align the print P every time one print is discharged (accumulated).

Next, the transport unit 58 is for receiving a stack of the prints P (hereinafter, referred to as a "print stack") accumulated in the accumulating unit 56 and aligned in the width direction, and transporting them to the input unit 60 on a downstream side, and includes a conveyer 80, a curl pressing roller 82 and shaking means for the conveyer 80 (not shown).

The conveyer 80 is a known belt conveyer, and includes an endless belt 84 and a pair of rollers 86 stretching the endless belt 84 at ends in the width direction. Each of the rollers 86 is axially supported by support plates 86a. In the illustrated example, the transport unit 58 has two conveyers 80 sandwiching the conveyer 72 in the width direction so that the rotation shaft of the roller 76 on a downstream side of the conveyer 72 of the accumulating unit 56 and the rotation shafts of the rollers 86 on an upstream side of the conveyers 80 are aligned to extend in the width direction. Because of this, the accumulating unit 56 and the transport unit 58 have an overlapping transport region, with the result that the transport of the print stack from the accumulating unit 56 to the transport unit 58 is performed reliably. The support plates 86a of each of the upstream side and downstream side of the two conveyers 80 are an integrated member.

Furthermore, the conveyer 72 of the accumulating unit 56 and the conveyer 80 are placed so that the transport path becomes linear when the print stack is conveyed from the accumulating unit 56 to the transport unit 58.

As described later, when the conveyer 80 transports the print stack to the input unit 60, the upstream side of the conveyer 80 is lifted up, so that the conveyer 80 is inclined so as to set the transport direction in a downwardly inclined direction (represented by a dotted line of FIG. 2A).

At this time, in order to prevent the print stack from collapsing in the transport direction, a wall portion 88 is erected on the surface (outer circumferential surface) of the endless belt 84 of the conveyer 80. The wall portion 88 has a height in accordance with the maximum storage number of the prints P and the like in the print pack 12 or has a height larger than the maximum stack height in accordance with the maximum storage number and the like. The conveyer 80 is controlled to drive so that the wall portion 88 is positioned on a downstream side from the print stack when the conveyer 80 receives the print stack from the accumulating unit 56, and is positioned on an upper surface of the conveyer 80 at the completion of the reception.

Furthermore, in order to transport the print stack more reliably in the same way as in the conveyer 72 of the accumulating unit 56, it is preferable that a pressing member 84a such as a protrusion or a wall part, which is positioned on an upstream side from the print stack at a time when the print stack is placed on the conveyer 80 completely, be provided on the surface of the endless belt 84.

The prints P immediately after being dried are generally curled with an image surface in a concave shape (trough shape).

Furthermore, in a photographic printer, the prints P are generally discharged with an image surface placed upward, and the printer 10 in the illustrated example also discharges the prints P from the discharge unit 48 to the accumulating unit 56 with an image surface upward.

The curl pressing roller 82 is provided as a preferable aspect, and presses the print stack from the above to correct the curls of the prints P.

In the illustrated example, the curl pressing roller 82 is axially supported at one end of a bar-shaped arm 90. Furthermore, the arm 90 is axially supported swingably by a shaft 92 at an opposite end of the curl pressing roller 82. The arm 90 is swung by a drive source (not shown), with the result that the curl pressing roller 82 is rotated to move up and down, as represented by the arrow b of the figure.

Before the print stack is delivered from the accumulating unit 56 to the transport unit 58, the curl pressing roller 82 moves upward. When the print stack is transported from the accumulating unit 56 to the transport unit 58, the curl pressing roller 82 moves downward to press the print stack from the above, thereby correcting the curls.

The curl pressing roller 82 may be a driven roller (idle roller), or a drive roller that is driven to rotate in synchronization with the transport of the print stack to the input unit 60 described later.

The conveyer 80 of the transport unit 58 can swing with respect to the rotation shaft of the roller 86 on a downstream side. When the roller 86 on an upstream side is lifted up by the drive source (not shown), as represented by a dotted line of FIG. 2A, the conveyer 80 is inclined with its downstream side positioned downward at an angle which is identical (substantially identical) to that of the conveyer 96 of the input unit 60 (described later). The curl pressing roller 82 also moves in synchronization with the swing of the conveyer 80, and the curl pressing roller 82 presses the print stack even in a state where the conveyer 80 is inclined. Furthermore, as described later, the conveyer 80 and the conveyer 96 of the input unit 60 are placed so that rotation axes of the rollers are aligned (coaxial), so that the conveyer 80 and the conveyer 96 are aligned when they are inclined at the same angle.

The transport unit 58 receives the print stack from the accumulating unit 56 under the condition that the conveyer 80 is placed horizontally. Then, the upstream side of the conveyer 80 is lifted up, with the result that the conveyer 80 is inclined at an angle that is identical to that of the conveyer 96 of the input unit 60. In this state, the print stack is transported to the input unit 60. Because of this, the transport unit 58 transports the print stack to the input unit 60 in a straight transport path which is inclined downwardly at (substantially) the same angle as that of the input unit 60.

As described above, by aligning the transport paths of both the conveyers 80 and 96, the print stack can be prevented from collapsing when it is transported from the transport unit 58 to the input unit 60.

The input unit 60 transports the print stack received from the transport unit 58 in a direction that is orthogonal to the width direction of the prints and is inclined downwardly, thereby inputting (inserting) the print stack in a packing sheet S to be formed into a print packing bag.

In the illustrated example, the input unit 60 includes a conveyer 96, a shutter 98, a guide plate 100, and two curl pressing rollers 102 axially supported by the guide plate 100.

The conveyer 96 is a known belt conveyer and includes a pair of rollers 104, and an endless belt 106 stretched across the rollers 104, and is placed with the transport direction inclined downwardly.

The roller 104 is axially supported by the support plates that are the same as those described above. Furthermore, in the same way as in the above-mentioned accumulating unit 56 and transport unit 58, the conveyer 96 is placed so as to be interposed between two conveyers 80 so that the rotation shaft of the roller 104 on an upstream side of the conveyer 96 of the input unit 60 and the rotation shafts of the rollers 86 on a downstream side of the conveyer 80 of the transport unit 58 are aligned to extend in the width direction. Because of this, the transport unit 58 and the input unit 60 (conveyers of both units) have an overlapping transport region, which enables a reliable transport to be performed. Furthermore, the transport paths of the print stack in the transport unit 58 and the input unit 60 can be set to be straight more preferably.

In the printer 10 in the illustrated example, the print stack is inputted into the packing sheet S owing to the transport of the print stack in a downwardly inclined direction and the gravity fall.

In order to prevent the transported print stack from collapsing and falling, it is preferable that a wall portion 108, which has a height in accordance with the maximum storage number of the prints P and the like in the print pack 12 (i.e., a height exceeding the maximum stack height), is erected on the surface of the endless belt 106 of the conveyer 96. The conveyer 96 is controlled to drive so that the wall portion 108 is positioned on a downstream side from the print stack (preferably; comes into contact with the tip end surface of the print stack) when receiving the print stack from the transport unit 58, and is positioned on an upper surface of the conveyer 96 at the completion of the reception.

Furthermore, in order to transport the print stack more reliably in the same way as in the conveyer 72 and the like of the accumulating unit 56, it is preferable that a pressing member 106a such as a protrusion or a wall portion, which is positioned on an upstream side from the print stack at a time when the print stack is placed on the conveyer 96 completely, be provided on the surface of the endless belt 106.

Although there is no particular limit to the transport speed of the conveyer 96 when the print stack is inputted into the packing sheet S, it is preferable that the transport speed be set to be higher than the free fall speed of the print stack.

Because of this, the print stack can be prevented from collapsing more reliably when the print stack is inputted into the packing sheet S, with the result that the print stack can be inputted into the packing sheet S more reliably under the condition that the prints are stacked neatly. When the transport speed is too high, the damage of the packing sheet S, the disturbance of the print stack caused by shock, and the like may occur. Therefore, it is preferable that the transport speed of the conveyer 96 be set to be 1 to 2000 mm/sec.

Furthermore, there is no particular limit to the angle of the conveyer 96 (angle with respect to the horizontal direction), i.e., the angle at which the print stack is inputted into the packing sheet S at a time of input. However, when the angle is too small, there is a possibility that the print stack is not inputted into the packing sheet S stably due to the collision between the packing sheet S and the print stack. Therefore, it is preferable that the angle of the conveyer 96 be 45° to 90°, in particular, 50° to 90°.

The guide plate 100 is a plate member placed at a distance from the endless belt by the maximum height in accordance with the maximum number of prints of the print stack and the curls of prints of the print stack. At a center in the width direction of the guide plate 100, a slit-shaped opening is formed so as to pass the pressure member 106a.

The guide plate 100 axially supports the curl pressing rollers 102, and regulates the height of the print stack transported from the transport unit 58, thereby guiding the print stack below the curl pressing rollers 102 on the upstream side.

Furthermore, the curl pressing rollers 102 press the print stack from above to correct the curls of the prints in the same way as in the above-mentioned curl pressing roller 82. The curl pressing rollers 102 are provided as a preferable aspect, and the curl pressing rollers 102 may be omitted in the case where there is less curls depending upon the sheet quality and the like of the prints P.

Furthermore, the conveyer 96 is driven so that the trailing edge of the print stack is pushed out by the pressing member 106a, with the result that the print stack can be inputted into the packing sheet S reliably at a high speed with the disturbance in the transport direction of the print stack reduced, and the disturbance in the length direction of the prints P in the print pack 12 can be reduced.

The shutter 98 prevents an unwanted fall of the print stack transported from the transport unit 74 more reliably, and functions as a guide member in the width direction and the falling direction at a time of input of the print stack into the packing sheet S.

In the illustrated example, the shutter 98 is a double doored shutter and includes two doors 98a that are opened from the center toward both sides, as represented by the arrow c of FIG. 2B, with the ends thereof in the width direction axially supported. Furthermore, the doors 98a have a substantially L-shaped cross-sectional shape when seen from the transport direction in an opened state.

With the two doors 98a opened, at least the tip end of the print stack is inserted in the packing sheet S through a slit (cut) d of the packing sheet S described later. Because of this, the shutter 98 functions as a guide more preferably.

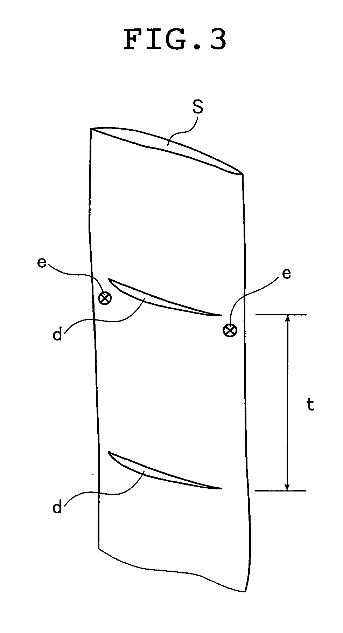

In the illustrated example, the packing sheet S is a tubular transparent long sheet in which two long sheets are overlapped and bonded at ends in the width direction, as shown in FIG. 3. The slits d are formed on one surface of the packing sheet S at an interval t corresponding to one print pack 12, each of which extends in a direction orthogonal to the longitudinal direction.

In the packing sheet supply unit 62, the packing sheet S is loaded with the surface having the slits d directed to the input unit 60, as a sheet roll 110 wound in a roll shape, and transported in a predetermined path by a guide roller pair 112, a transport roller pair 114, and the like.

The transport of the packing sheet S is stopped, when the slit d arrives at a position appropriate for inputting the print stack from the input unit 60, for example, when the slit d arrives at a position slightly below the lower end of the conveyer 96 of the input unit 60.

The opening holding means 64 holds a portion just below the slit d of the packing sheet S (e.g., holding by suction), and moves in a direction (represented by the arrow of FIG. 1) that opens the tubular packing sheet S, thereby opening the slit d of the packing sheet S. Furthermore, it is preferable that the wind is blown to the slit d from above by a fan or the like to enlarge the opening of the slit d, and expand the packing sheet S.

In the illustrated example, the packing sheet S has its lower part guided by a transport roller pair 114 under the condition that the lower end thereof is sealed as described later, and stands by while being suspended from the guide roller pair 112 under the condition that the slit is opened by the opening holding means 64.

As described above, the prints P are transported through the discharge unit 48 and discharged and accumulated in the accumulating unit 56 (on the conveyer 72) by the output roller pair 50. Furthermore, the accumulating unit 56 sandwiches the accumulated prints P by the width shift guides 74 at a predetermined timing (e.g., on one print basis), and aligns the prints P in the width direction.

In the packer 20, when it is detected that the prints P of one order (or the maximum number of prints that can be stored in the print pack 12) are accumulated in the accumulating unit 56, for example, based on sort information or the like, the conveyer 72 of the accumulating unit 56 and the conveyer 80 of the transport unit 58 are driven in synchronization with each other, and the print stack is transported from the accumulating unit 56 to the transport unit 58.

When the print stack is transported to the transport unit 58, the curl pressing roller 82 moves downward and presses the print stack from above to correct the curls. Then, the rollers 86 on the upstream side are lifted up, with the result that the conveyer 80 is inclined as represented by a dotted line of FIG. 2A.

When the conveyer 80 of the transport unit 58 and the conveyer 96 of the input unit 60 are inclined at the same angle, the conveyer 80 and the conveyer 96 are driven in synchronization with each other, and the print stack is transported from the transport unit 58 to the input unit 60. The transport of the print stack in the input unit 60 is stopped at a time when the wall portion 108 comes to a predetermined position.

On the other hand, as described above, the packing sheet S stands by under the condition that the slit d is opened by the opening holding means 64 or in addition the fan, and the packing sheet S is suspended from the guide roller pair 112.

When the print stack is transported to the input unit 60, the shutter 98 is opened. At the same time, the conveyer 96 is driven so as to transport the print stack in the downwardly inclined direction, and the print stack is inputted into the packing sheet S from the opened slit d. In this case, the doors 98a of the shutter 98 have at least tip ends thereof inserted in the packing sheet S and function as a guide for inputting the print stack.

The input operation of the print stack may not be stopped once in the input unit 60. The shutter 98 may be opened beforehand so that the print stack is transported continuously through the transport unit 58 and the input unit 60 to be inputted into the packing sheet S.

Thus, the prints P are aligned and accumulated in the width direction in the accumulating unit 56, and the print stack is transported in the downwardly inclined direction in the input unit 60 to be inputted into the packing sheet S (packing material), with the result that the print stack can be inputted under the condition of being stacked neatly without any disturbance. Therefore, even with a small packing material (bag) that corresponds to the print size or the maximum storage number of the prints, the prints can be stored reliably under the condition of being accumulated neatly.

Furthermore, owing to the presence of the curl correcting means such as the curl pressing roller 82, it can be prevented that the print stack is difficult to input into the packing sheet S due to the curls of the prints P, thereby enabling the print stack to be inputted into the packing sheet S more reliably.

Furthermore, the conveyer 80 is inclined downwardly that is the same angle as that of the input unit 60, so that the print stack is transported to the input unit 60 in a linear transport path, with the result that the print stack can be inputted more reliably while the print stack is prevented from being disturbed or collapsing during transport. In this case, the following may be possible: the input unit 60 is provided on an immediately downstream side of the accumulating unit 56, and the accumulating unit 56 is inclined so that the print stack is transported from the accumulating unit 56 to the input unit 60. Furthermore, in the illustrated example, the configuration is such that the transport unit 58 is provided between the accumulating unit 56 and the input unit 60, and the transport unit 58 is inclined to transport the print stack to the input unit 60. Thus, after the prints of one order are accumulated in the accumulating unit 56 and transported to the transport unit 58, the prints P for the next order can be accumulated immediately, so that smooth print production with a satisfactory efficiency can be performed.

When the print stack (prints P of one order) is stored in the packing sheet S, the opening holding means 64 releases the packing sheet S (or further stops the fan). Then, the sheet roll 110 is rotated to send the packing sheet S to a position where the slit d reaches the seal/cut unit 66.

The seal/cut unit 66 seals and cuts the packing sheet S, for example, by heating with a heater. The heater has a minute convex portion extending in the width direction at the center of the heater (the center in the transport direction of the packing sheet S).

The feed of the packing sheet S is stopped at a position where the convex portion at the center of the heater is matched with the slit d. Then, the heater of the seal/cut unit 66 is pressed against the packing sheet S, the packing sheet S is sealed (closed) in upper and lower portions of the slit d, and the packing sheet S is cut (by melting) at the slit d with the convex portion at the center of the heater.

Because of this, the lower end of the packing sheet S (lower end of the packing sheet S connected to the sheet roll 110) for storing the next prints P is closed, and the upper end of the packing sheet S storing the prints P of one order is closed and cut, with the result that one print pack 12 is completed.

The print pack 12 storing the prints P is transported downward by the transport roller pairs 114 and 116, and guided by the guide 118 to be stored in a product storage unit 70.

In the packer 20 in the illustrated example, the prints P to be accumulated are aligned in the width direction by sandwiching them between the two width shift guides 74 in the accumulating unit 56. However, the present invention is not limited thereto, and as a method of aligning the prints P, various kinds of methods can be used.

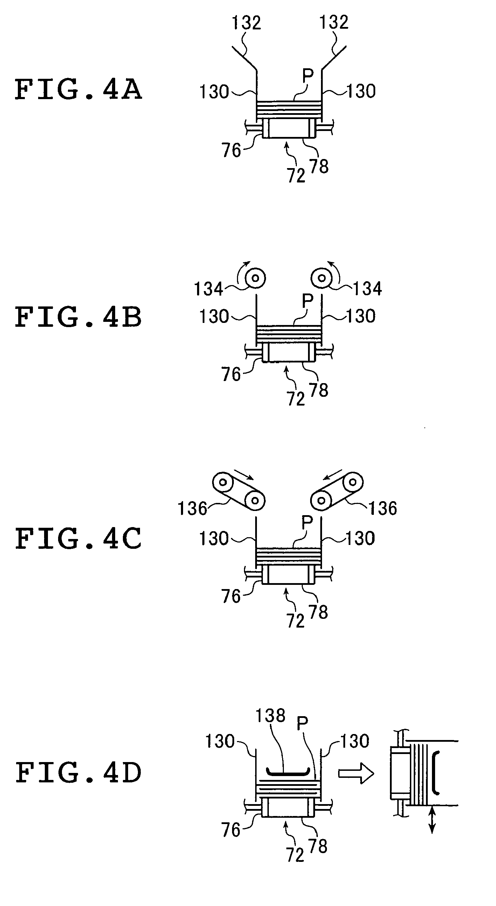

FIG. 4A shows an exemplary method. According to this method, two accumulating plates 130 (the positions of which can be adjusted in the width direction) for accumulating the prints P are provided at a distance from each other in the width direction so as to correspond to the conveyer 72 of the accumulating unit 56 (the transport direction is orthogonal to the drawing surface of FIG. 4A, which is applied to the following examples). Guide plates 132 are provided at the upper end portions of the accumulating plates 130, which are inclined downward toward the upper ends of the accumulating plates 130. The prints P are allowed to fall naturally along the guide plates 132, with the result that the prints P are accumulated while being aligned in the width direction between the accumulating plates 130.

Alternatively, as shown in FIG. 4B, rollers 134 are provided above the similar accumulating plates 130. The rotation shafts of the rollers 134 extend in the transport direction, and the rollers 134 rotate in directions (represented by arrows) so that the prints P are accumulated between the accumulating plates 130. Alternatively, as shown in FIG. 4C, belt conveyers 136 are provided. The rotation shafts of the belt conveyers 136 extend in the transport direction, and the belt conveyers 136 rotate in directions (represented by arrows) so that the prints P are accumulated between the accumulating plates 130. The prints P are forced to fall toward the center between the accumulating plates 130, with the result that the prints P are accumulated while being aligned in the width direction between the accumulating plates 130.

Furthermore, as shown in FIGS. 2A and 2B, in the case where the prints P to be accumulated are aligned by sandwiching them between the width shift guides 74, the endless belt 90 may be vibrated, the entire conveyer 72 may be vibrated, or like method may be used when the prints P are sandwiched between the width shift guides 74, thereby assisting the alignment of the prints P by the width shift guides 74.

Furthermore, as shown in FIG. 4D, the following method is also possible. A guide or a member for forcefully regulating the falling direction is not particularly provided. The prints P of one order are accumulated by a free fall between the width shift guides 74 placed at a relatively large distance with each other. Then, the prints P are covered with a press lid 138 for preventing the discharge of the prints P, and the conveyer 72 and the accumulating plates 130 are integrally inclined so that the prints P are directed vertically. A vibration is applied if required, and the ends of the prints P are brought into contact with one accumulating unit 130, thereby aligning the prints P.

Next, a packing apparatus and a packing method according to the second aspect of the present invention, and a print producing apparatus using the same will be described with reference to FIGS. 3 and 5 to 7B.

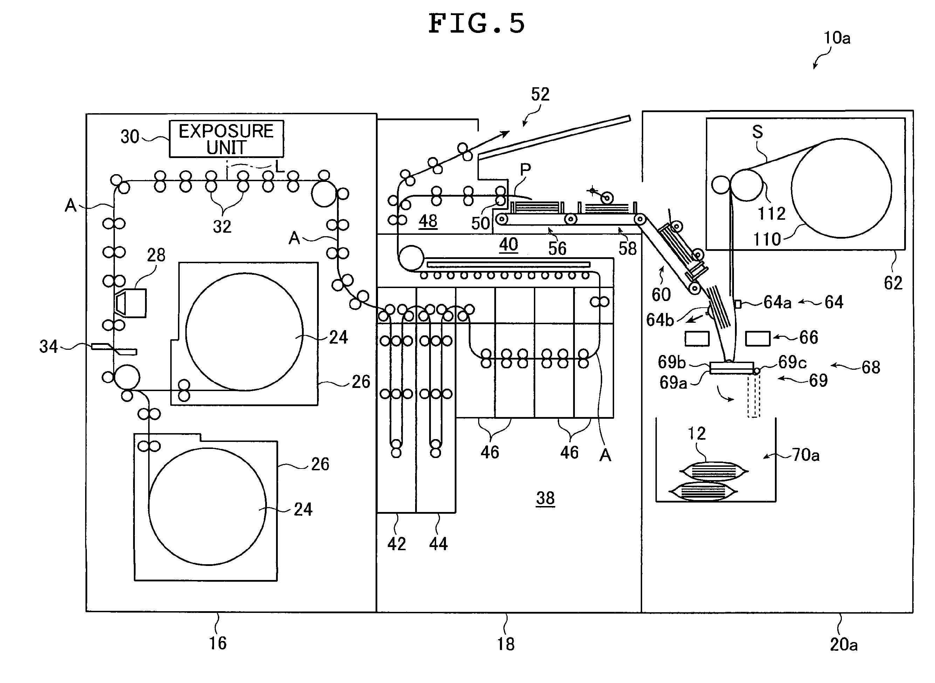

FIG. 5 is a schematic view showing one example of a printer that is one embodiment of the print producing apparatus of the present aspect, using one embodiment of the packing apparatus of the present aspect performing the packing method of second aspect of the present invention.

A printer 10a shown in FIG. 5 includes, as described above, the image processor 16 and the processor 18 that function as an image forming apparatus, and a packer 20a that is one example of the packing apparatus of the present aspect.

The printer 10a shown in FIG. 5 has the same configuration as that of the printer 10 shown in FIG. 1, except that the packer 20a is provided in place of the packer 20. Furthermore, the packer 20a shown in FIG. 5 also has the same configuration as that of the packer 20 shown in FIG. 1, except that a print input load alleviating unit 68 for supporting the tip end of the print pack 12, and a product storage unit 70a for storing the print pack 12 are provided in place of the transport roller pairs 114 and 116 for transporting the print pack 12, the guide 118 for guiding the print pack 12, and the product storage unit 70 for storing the print pack 12. Therefore, like components are denoted with like reference numerals, and the detailed description thereof will be omitted.

The packer 20a is a packing apparatus of the present aspect for accumulating and packing the prints P discharged from the processor 18 for each order, and includes the accumulating unit 56, the transport unit 58, the input unit 60, the packing sheet supply unit 62 for supplying the packing sheet S, the opening holding means 64, the seal/cut unit 66, the print input load alleviating unit 68, and the product storage unit 70a.

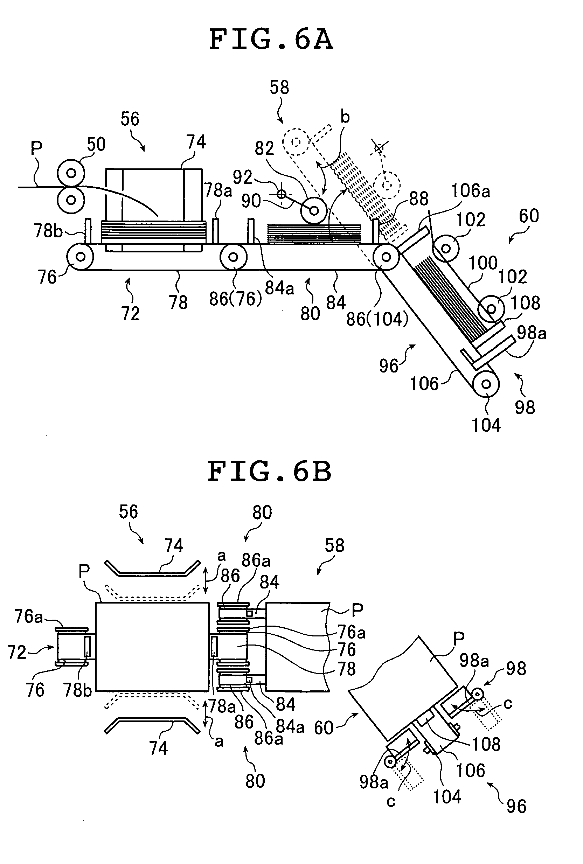

FIGS. 6A and 6B are a front view and a plan view specifically showing schematic configurations of the accumulating unit 56, the transport unit 58, and the input unit 60, respectively.

The accumulating unit 56, the transport unit 58, and the input unit 60 of FIGS. 6A and 6B are shown in a different manner from the accumulating unit 56, the transport unit 58, and the input unit 60 of FIGS. 2A and 2B. However, they have basically the same configuration, so that the description required for the present aspect will be mainly made, and the similar description will be omitted. Thus, it should be appreciated that the present aspect, specifically, the embodiment shown in FIGS. 6A to 7B are also applicable to the packer 20 and the printer 10 shown in FIG. 1.

In FIGS. 5, 6A, and 6B, for ease of understanding of the state of the transport of the prints P in each unit of the accumulating unit 56, the transport unit 58, and the input unit 60, a stack of the prints P is shown in each of the above units. However, during actual transport of the prints P, the prints P are not necessarily transported to each of the above units. For example, in this embodiment, as described later, the transport of the prints P from the transport unit 58 to the input unit 60, and the subsequent input of the prints P into the packing sheet S are performed continuously. Therefore, when the print stack is transported to the transport unit 58, the input unit 60 and the packing sheet S are put in a stand-by state for print input, and the other print stacks have not been transported and inputted.

In the illustrated example, the accumulating unit 56 includes the conveyer 72, the width shift guides 74, and drive means and bias means (not shown in FIGS. 6A and 6B) of the width shift guides 74 described later. The width shift guides 74 are placed on both sides in the width direction of the conveyer 72, as shown in FIG. 6B. In FIG. 6A, for clarifying the configuration of the conveyer 72, the conveyer 72 on the front side in the figure is omitted.

The conveyer 72 is a known belt conveyer and includes a pair of rollers 76, 76, and the endless belt 78 stretched across the rollers 76, 76, and accumulates the prints P and transports them to the transport unit 58 on a downstream side. The endless belt 78 functions as an accumulating platform for accumulating the prints P discharged from the output roller pair 50 (print discharge unit). The rotation axe of each of the rollers 76, 76 is supported by support plates 76a, 76a (see FIG. 6B) provided on both sides of each of the rollers 76, 76 in the width direction.

In order that the prints P discharged from the output roller pair 50 are accumulated onto the endless belt 78, the conveyer 72 is placed below the output roller pair 50 in a vertical direction in such a manner that the roller 76 on an upstream side (i.e., an upstream side end of a transport surface of the endless belt 78) is placed at substantially the same position (slightly downstream side in the illustrated example) as that of the output roller pair 50 or a position on an upstream side thereof. Furthermore, the width of the endless belt 78 is smaller than a minimum size in the width direction of the corresponding prints P, with the result that the width shift guides 74 are brought into contact with the ends in the width direction of the prints P to perform width shift by the width shift guides 74 reliably.

The drive means for the width shift guides 74 allows the two width shift guides 74, 74 to reciprocate in synchronization with each other in the direction represented by the arrow a of FIG. 6B. Owing to this reciprocation, as represented by a dotted line of FIG. 6B, the width shift guides 74, 74 come into contact with the ends in the width direction of the prints P discharged/accumulated onto the conveyer 72 so as to sandwich the prints P from both sides in the width direction, thereby regulating the positions in the width direction of the prints P, and performing the width shift of the accumulated prints P.

Hereinafter, the configurations of the width shift guides 74, and the drive means and the bias means thereof will be described in detail.

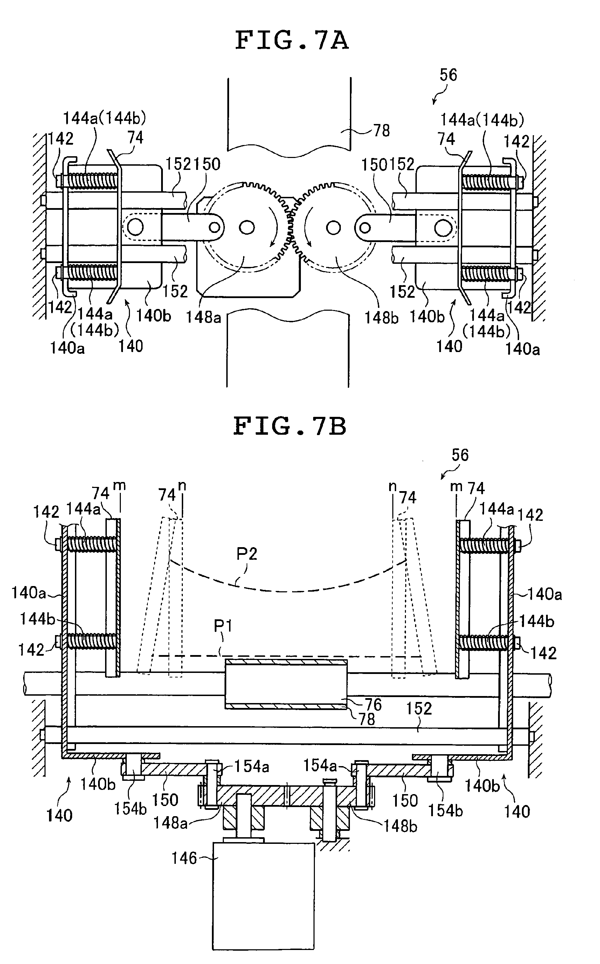

FIGS. 7A and 7B are views showing schematic configurations of the width shift guides 74, and the drive means and the bias means thereof. FIG. 7A is a plan view (seen from the direction orthogonal to FIG. 6B) with the vertical direction in the figure being a transport direction, and FIG. 7B is a partial cross-sectional side view seen from a downstream side in the transport direction.

The width shift guides 74, 74 are a pair of plate-shaped guide members (regulating members) placed on both sides in the width direction of the endless belt 78 of the conveyer 72 so as to sandwich the endless belt 78, with guide surfaces thereof opposed to each other. The width shift guides 74, 74 are placed at an interval larger than the width of the prints P. Furthermore, the width shift guides 74, 74 have a height exceeding the maximum stack height corresponding to the maximum accumulated number of the prints P to be accumulated in the accumulating unit 56 and the like. The maximum accumulation number of the prints P to be accumulated in the accumulating unit 56 is determined in accordance with the maximum storage number of the prints P in the print pack 12 and the like.

Furthermore, as a preferable aspect, the width shift guides 74, 74 have a degree of freedom in the height direction. Specifically, the guide surfaces can be inclined in the height direction.

The pair of width shift guides 74, 74 respectively include the same drive means and bias means. Therefore, the width shift guide 74 on the right side in the transport direction (left side in FIGS. 7A and 7B) will be described as a representative of the shift guides on both sides.

In the illustrated example, the width shift guide 74 is supported by a support plate 140 via four springs 144a, 144a, 144b, 144b (two in the width direction and two in the height direction). The support plate 140 is a plate member with a substantially L-shaped cross-section, and includes a wall surface portion 140a having a surface substantially parallel to a guide surface of the width shift guide 74, and a bottom surface portion 140b extending in a width shift direction (i.e., in a direction toward the endless belt 78) from the lower end of the bottom surface portion 140a.

At predetermined four positions of the wall surface portion 140a, through-holes larger than cylindrical portions of pins 142 (or screws) and smaller than head portions of pins 142 are provided, and the pins 142 are inserted in the through-holes from the side (outer side) opposite to the endless belt 78. The tip ends of the pins 142 are fixed to the surface on an opposite side of the guide surface of the width shift guide 74. Furthermore, on the cylindrical portion of each pin 142, a compression coil spring 144a or 144b having an inner diameter larger than the cylindrical diameter is fitted, and set between the width shift guide 74 and the wall surface portion 140a in a state of having a free height or being slightly compressed.

In order to enable the width shift guide 74 to be inclined in the height direction, the through-holes of the pins 142 of the wall surface portions 140a are set to have a diameter large enough for allowing the pins 142 to incline, or are set to be a long hole elongated in the height direction. Alternatively, the angle defined by the pin 142 and the width shift guide 74 may be varied.

The springs 144a and 144b bias the width shift guides 74 toward the prints P to be subjected to width shift. In the illustrated example, on the upper side in the height direction of the width shift guide 74, two springs 144a, 144a having the same spring constant are attached, and on the lower side thereof, two springs 144b, 144b having a spring constant smaller than that of the spring 144a are attached.

According to the above configuration, in an initial state, the width shift guide 74 is supported by the support plate 140 at a position that is away from the wall surface portion 140a by a distance corresponding to the length of the pin 142. When a pressure is applied to the guide surface of the width shift guide 74, the width shift guide 74 moves so as to approach the wall surface portion 140a while the springs 144a and 144b being compressed between the width shift guide 74 and the wall surface portion 140a. When the springs 144a and 144b are compressed, the head portion of the pin 142 protrudes from the outer surface of the wall surface portion 140a.

Furthermore, two guide shafts 152 for regulating and guiding the movement direction of the support plate 140 in the direction parallel to the width direction pass through portions of the wall surface portion 140a below the width shift guide 74 and the conveyer 72. The guide shafts 152, 152 extend across both the width shift guides 74, 74 in the direction orthogonal to the transport direction of the prints P by the endless belt 78 (i.e., the width direction), and pass through the wall surface portions 140a, 140a of both the support plates 140, 140, with the result that both ends thereof are fixed respectively to the support members. At a contact portion between the guide shaft 152 and the wall surface portion 140a, a sliding member or a sliding mechanism is used.

As drive means for reciprocating the width shift guides 74, 74, a motor 146, gears 148a, 148b, links 150, 150, members connecting them, and the like are provided between the pair of width shift guides 74, 74 and below the conveyer 72.

The motor 146 rotates a predetermined number of turns in accordance with the sort information (breakpoint of orders, or information representing the breakpoint for prints to be inserted in one print packing bag) of the prints P produced by the image processor 16 and the processor 18, or the discharge signal of the prints P discharged from the output roller pair 50 of the processor 18. For example, a stepping motor is used as the motor 146. A gear 148a is fixed to a rotation shaft of the motor 146.

The gear 148a is connected to the support plate 140 on the left side in FIGS. 7A and 7B via the link 150. To be more specific, a pin 154a is fixed to the gear 148a in parallel with a rotation shaft thereof, and one end of the link 150 is rotatably attached to the cylindrical portion of the pin 154a protruding above the gear 148a (on an opposite side of the motor 146). The other end of the link 150 is rotatably fitted to a pin 154b fixed to the bottom surface portion 140b of the support plate 140. It is preferable to interpose a sliding member between the gear 148a and the link 150 connected via the pin 154a, and between the bottom surface portion 140b and the link 150 of the support plate 140 connected via the pin 154b, in order to prevent the malfunction or damage caused by the sliding friction of both members.

When the motor 146 rotates, the gear 148a rotates, and the end of the link 150 connected to the gear 148a circulates in a predetermined diameter determined by the distance between the rotation shaft of the motor 146 and the gear 148a. The support plate 140 connected to the other end of the link 150 reciprocates at a predetermined stroke corresponding to the diameter in a direction parallel to the width direction (horizontal directions in FIGS. 7A and 7B) while being guided by the above-mentioned guide shafts 152, 152.

On the other hand, the gear 148a is engaged with the gear 148b axially supported by a fixing member, and the support plate 140 for supporting the width shift guide 74 on the right side in FIGS. 7A and 7B is connected to the gear 148b via the link 150. Thus, the support plate 140 on the right side in the figure also reciprocates at a predetermined stroke in the width direction while being guided by the guide shafts 152, 152 due to the rotation of the motor 146, in the same way as in the support plate 140 on the left side.

The gears 148a and 148b have the same diameter and the same number of teeth, and are engaged with each other at a position corresponding to substantially the center in the width direction of the endless belt 78. Furthermore, the size and positional relationship of each member connecting the gears 148a and 148b to both the support plates 140, 140 are set to be the same. Then, as shown in FIGS. 7A and 7B, the gears 148a and 148b are engaged with each other such that the pin 154a attached to the other gear 148b is positioned on an outermost side in the width direction when the pin 154a attached to the gear 148a is positioned on an outermost side in the width direction.

Thus, the pins 154a, 154a of the gear 148a, 148b move so as to approach to or leave from each other in synchronization each other along with the rotation of the motor 146, with the result that the width shift guides 74 reciprocate between the initial positions farthest from each other (positions shown in FIGS. 7A and 7B, or positions m of FIG. 7B) and positions closest to each other (positions n of FIG. 7B).

Every time a predetermined number of prints P are accumulated on the endless belt 78 that serves as an accumulating platform of the prints P (i.e., after a predetermined number of prints P are discharged and accumulated on the endless belt 78 and before the next print P is discharged), the drive means for the width shift guides 74 allows the width shift guides 74 to reciprocate to positions where they sandwich the prints P accumulated on the endless belt 78 to align the ends in the width direction of the prints P.

When the width shift guides 74, 74 move to the inner side in the width direction from the initial positions m shown in FIG. 7B to come into contact with the ends in the width direction of the prints P, and move further to the inner side, a pressure force directed to the outer side in the width direction which is caused by the rigidity of the prints P, and the bias force directed to the prints P which is caused by the springs 144a, 144b opposed to the pressure force are applied to the width shift guides 74. When the support plates 140 move so as to move the width shift guides 74 to the positions n close to the center (positions at stroke ends), the bias force caused by the springs 144a, 144b becomes maximum.

The setting of the bias force and the stroke of the width shift guide 74 (support plate 140) will be described.

In the printer 10 in the illustrated example, a print P is produced using a photosensitive material A (printing paper). The developed print P immediately after being dried is generally curled with an image surface in a concave shape to form a trough shape. Furthermore, in the photographic printer, it is preferable that the print P be discharged with an image surface thereof placed upward, because an image reproduced on the print P can be confirmed immediately. Therefore, in the printer 10 in the illustrated example, the print P is discharged from the discharge unit 48 to the accumulating unit 56 with an image surface placed upward.

In the case of rectangular prints P, the influence of curls of the prints P is more remarkable in a short direction (width direction) than in a longitudinal direction. To be more specific, the prints P immediately after being dried are curved in the width direction. In the printer 10, print production processing is performed with the longitudinal direction of the prints P matched with the transport direction. Therefore, the accumulated prints P are curved with an upper side in a concave shape in a direction vertical to the drawing surface of FIGS. 5 and 6A seen from the width direction, and are curved with an upper side in a concave shape in horizontal directions as represented by a broken line as prints P2 in FIG. 7B seen from the transport direction.

The curls in a concave shape (trough shape) become flattened with the passage of time. This is caused by the difference in moisture absorption rate of layers (e.g., a gelatin layer of an image forming surface) constituting the photosensitive material A. Therefore, in one print stack in which the prints P are processed, discharged, and stacked successively one by one, the curl degree of each print P varies slightly. That is, the print P that is discharged earlier is curled less (represented as the print P1 of FIG. 7B), and the print P that is discharged later is curled more (represented as the print P2 of FIG. 7B). Furthermore, the variation in a curl amount of the prints P immediately after being dried is large.

If the prints P having such curls are aligned merely by regulating the positions in the width direction thereof within the width of the not curled print P, the positions of the curled prints P vary in a range of the regulated width. Therefore, in the case where a curl amount is reduced after the passage of a predetermined period of time, or in the case where the curls are regulated by pressing the surfaces of the prints P, the ends of the prints P whose curls are flattened protrude from the regulated width of the prints P, and furthermore, the protruding direction and protruding amount of each print P also vary, so that the width as a print stack is enlarged.

Therefore, in the packer 20 of the present invention, the stroke of the width shift guides 74, 74 (support plates 140, 140) in the accumulating unit 56 and the bias force of the width shift guides 74, 74 are set as follows.

First, the stroke of the support plates 140, 140 supporting the width shift guides 74, 74 is set so as to regulate the positions of the prints P to be equal to the width of the prints P (minimum width of the prints P) when the curl amount of the prints P is maximum (e.g., the state of the prints P2), or to be in a range narrower than the minimum width. To be more specific, the stroke of the support plates 140, 140 is set so that when there is no print P on the endless belt 78, the width shift guides 74, 74 move to the positions n at which the interval between the width shift guides 74, 74 is equal to or smaller than the minimum width of the prints P.

Furthermore, the spring 144a on the upper side and the spring 144b on the lower side that are bias means for the width shift guides 74, 74 are selected so that the bias force exerted while the width shift guides 74 are in contact with the prints P is larger than the force for moving a predetermined number of prints P in accordance with the timing at which the width shift guides 74 are driven, and smaller than the force for changing the shape of the prints P accumulated on the endless belt 78.

The bias force smaller than the force for changing the shape of the prints P refers to a bias force in a range of not increasing the curl amount or not buckling the prints P in the case where the prints P are curled, and refers to a bias force in a range of not causing a buckle or a wrinkle in the case where the prints P are not curled. The deformation to an extent in which restoration is possible by the removal of a bias force, such as slight bending of the prints P, is within an allowable range.

When the number of the prints P stacked between the width shift guides 74 is small, the springs 144b on the lower side substantially act for performing width shift of the prints P. Thus, in particular, the springs 144b on the lower side are selected so as to have a bias force smaller than that for changing the shape of a minimum number of prints P accumulated on the endless belt 78 for the width shift guides 74 to start width shift. For example, in the case of driving the width shift guides 74, 74 every time one print P is discharged, the springs 144b used have a bias force that is larger than the force for moving one print P on the endless belt 78 or on the prints P previously accumulated, and does not change the shape of the first one print placed on the endless belt 78.

When the prints P are further stacked, the springs 144a on the upper side also act. The rigidity in the width direction of the stack of the prints P becomes large when a large number of prints are stacked, so that the springs 144a that are stronger (have a larger spring constant) than the springs 144b can be used. Then, by using a spring stronger than the spring 144b as the spring 144a on the upper side, the prints P can be biased more reliably to be subjected to appropriate width shift. Furthermore, by inclining the width shift guides 74 so as to correspond to the inclination of the ends in the width direction of the print stack, and bringing the width shift guides 74 into contact with the ends of the prints P that are stacked on an upper side and still have a large curl amount, the width shift of the prints P can be performed reliably.

As described above, springs having different spring constants are used on the upper side and the lower side in the height direction of the width shift guides 74, and a larger bias force is provided at a higher position (upper side) compared with that at a lower position (lower side). Therefore, when a predetermined number of prints P discharged initially are subjected to width shift, the minimum number of prints P can be biased with a weak bias force that does not deform the prints P to be subjected to width shift. Also, a print stack including a large number of prints is biased with a sufficient bias force even in the case where the end surfaces of the print stack in the width direction are inclined. Thus, the positions in the width direction can be aligned with respect to all the stacked prints.

Furthermore, the bending amounts of the springs 144a and 144b are set so that the width shift guides 74 can come into contact with the entire ends (end surfaces) in the width direction of the print stack on the endless belt 78, even in the case where the end surfaces in the width direction of the print stack are inclined due to the curls of the prints P.

According to the above configuration, the positions in the width direction of the prints P accumulated under the condition of being curled are aligned on the basis of the center. Even if the curls decrease with the passage of time, owing to the curl regulation, or the like, it is possible to obtain a print stack with less variation in which the ends (edges) thereof in the width direction are aligned.

Then, by aligning the positions in the width direction of the print stack in the accumulating unit 56, the print stack can be inserted in a packing material neatly without any disturbance, and the prints can be stored reliably even in a packing bag (packing sheet S) with a small width.

Next, the width shift operation in the accumulating unit 56 will be described.

Before the commencement of the width shift operation, the width shift guides 74, 74 are placed at positions at an interval larger than the width of the prints P as original positions.

When a predetermined number of prints P are discharged onto the endless belt 78, the packer 20 drives the drive means for the width shift guides 74, 74 to allow them to reciprocate toward the prints P, and accumulates the prints P while performing width shift.

The width shift guides 74 repeat the width shift operation of the prints P every time a predetermined number of prints P are discharged until before the subsequent print P is discharged.

When the packer 20 receives a signal (sort information) indicating that the accumulation of the prints P to be packed in one packing sheet S is completed, the width shift guides 74, 74 move toward the print stack and stop under the condition of being in contact with the print stack. Because of this, even if a user touches the prints P for confirmation or the like and shifts them, or the wind from an air conditioner shifts the prints P during accumulation, the width of the print stack can be aligned finally.

Next, the endless belt 78 is driven, and the accumulated print stack is transported to the transport unit 58 in the subsequent step with the ends in the width direction being guided by the width shift guides 74. That is, the width shift guides 74 are allowed to act as transport guides.

When the print stack is transported to the transport unit. 58, the width shift guides 74 return to the original positions, and are put in a stand-by state for performing accumulation and width shift of the subsequent prints P.

The drive timing of the width shift guides 74, 74, i.e., the timing of aligning the prints P (the number of the prints P to be accumulated) may be appropriately set in accordance with the number of the accumulated prints P which can be moved and whose positions in the width direction can be aligned. For example, the width shift guides 74 may be driven every time one print P is discharged (accumulated) or every time at least two predetermined number of prints P are discharged (accumulated).

The sandwiching force (pressure force) by the width shift guides 74 of the accumulating unit 56, and the number of the accumulated prints P to be subjected to width shift by the width shift guides 74 may be set to be the same as those in the case of the first aspect.

However, in order to perform width shift more reliably, the width shift guides 74 may be brought into contact with the prints P a plurality of times per timing of one drive of the width shift guides 74. The number of times where the width shift guides 74 come into contact with the prints P corresponds to the rotation number of the motor 146.

In the above example, by using weak springs on the lower side of the width shift guide 74, and strong springs on the upper side thereof, a minimum number of prints are not deformed, and the entire prints P can be subjected to width shift appropriately.

However, as the springs on the upper side and the lower side of the width shift guides 74, those having the same spring constants may be used. In this case, it is preferable to select springs which can exhibit a bias force capable of reliably moving the prints P to perform width shift. In the case where the bias force of the selected springs is larger than that for deforming one print P, the number of prints P when the bias force becomes smaller than the rigidity in the width direction of the print stack including a plurality of prints P may be set to be an initial number, and the width shift guides 74 may be driven to start after the initial number of prints P are accumulated on the endless belt 78.

Furthermore, the number of springs to be provided in the transport direction is not limited to two shown in the illustrated example, and three or more springs may be arranged. The width shift guides 74 are supported by a plurality of springs arranged in the transport direction, with the result that width shift can be performed with the prints P biased substantially uniformly in the transport direction.

The number of springs to be provided in the height direction is not limited to two, and three or more may be arranged. In this case, the bias force may be changed gradually in the height direction.

Furthermore, as the bias means for the width shift guides 74, a cylinder using air or liquid, an elastic member, or the like can be used in place of the spring, as long as a required bias force and bending amount (stroke) are obtained.

Furthermore, according to the configuration in which a pair of width shift guides 74, 74 can move in the width direction, and are driven in synchronization with each other so as to sandwich the prints P as in this embodiment, width shift can be performed efficiently by bringing the width shift guides 74 into contact with the prints P from both sides. Therefore, this configuration is excellent in terms of alignment.

In particular, in the case where the prints P are curled, according to the above configuration, all the prints P are accumulated based on the center between the two width shift guides 74, 74, with the result that the following effect is obtained. In the step from the completion of accumulation to packing, even in the case where the curls are pushed by pressing the center portion of the prints P, or even in the case where the curls become small naturally, the prints P do not protrude in the width direction, and the aligned state after the width shift can be substantially kept.

However, for example, in the case where the prints P are not curled, or in the case where the curls are very small, one of the width shift guides 74 is fixed, and only the other width shift guide 74 is allowed to reciprocate, with the result that the width shift of the prints P based on the guide surface of the fixed width shift guide 74 may be performed.

Furthermore, in the packer 20 of this embodiment, the accumulating unit 56 is particularly excellent in the following point. The accumulating unit 56 can perform width shift appropriately with respect to curls peculiar to the prints P using the photosensitive material A and the change in curls with the passage of time. However, according to the packing method and the packing apparatus of the present invention, the width shift of prints can be performed appropriately even with respect to the prints using a material other than a photosensitive material.

For example, even in the case of curled prints in which the curl amount varies depending upon the winding position of a roll or the change in the curl amount with the passage of time is small, as in the prints produced by various kinds of image forming methods such as an electrophotographic method and an ink jet method, using paper supplied under the condition of being wound in a roll shape, the width shift of the prints can be performed appropriately by appropriately selecting the bias force to the prints applied by the width shift guides 74. It is preferable that the width shift guides 74 can be inclined in the height direction in the same way as in the above example to handle both cases where the lower side becomes narrow and where the upper side becomes narrow.

Furthermore, for example, in the case where prints to be accumulated are not curled, as in the case of using paper supplied as a sheet or in the case where means for correcting prints is provided, the width shift guides 74 may not be capable of inclining. The width shift of the prints can be performed appropriately by setting the width shift interval of the width shift guides 74, 74 to be substantially the same as the print width, and appropriately selecting the bias force to the prints which is applied by the width shift guides 74.

Furthermore, in this embodiment, the width direction of the prints P in the accumulating unit 56 is matched with the width direction of a packing bag. Therefore, the print stack accumulated in the accumulating unit 56 is transported and packed as it is. However, in the case where the width direction of the prints in the accumulating unit 56 is different from the width direction of the packing bag, it is necessary to change the direction of the print stack.

In this case, in order to suppress the positions in the width direction of the print stack to disturb, it is preferable that the accumulating platform of the prints P in the accumulating unit 56 and the width shift guides be configured to be rotatable, and the direction of the print stack can be changed under the condition that the positions in the width direction are aligned. It is preferable that the print stack be sandwiched by the width shift guides during rotation of the accumulating platform and the width shift guides.

The transport unit 58 shown in FIGS. 6A and 6B is the same as that shown in FIGS. 2A and 2B, and similarly includes the conveyer 80, the curl pressing roller 82, and the shaking means (not shown) for the conveyer 80.

The conveyer 80 of the transport unit 58 is a known belt conveyer and includes the endless belts 84 and the pair of rollers 86, 86 stretching the endless belts 84. In the illustrated example, the transport unit 58 includes two conveyers 80, 80 placed in parallel with the width direction and driven in synchronization with each other. The rollers 86, 86 of the respective conveyers 80 have the rotation axes thereof supported by support plates 86a, 86a (see FIG. 6B) provided on both sides in the width direction. The support plates 86a of two conveyers 80, 80 on each of the upstream and downstream side of the conveyers 80, 80 form an integrated member. Furthermore, the transport surfaces of the endless belts 84, 84 of the conveyers 80, 80 are in the same plane, and are placed at an interval smaller than the minimum width of the prints P.

In the illustrated example, two conveyers 80, 80 are placed at positions where they sandwich the conveyer 72 of the accumulating unit 56 in the width direction, and the rotation axes of the rollers 86, 86 on the upstream side of the conveyers 80, 80 and the rotation shaft of the roller 76 on the downstream side of the conveyer 72 of the accumulating unit 56 are aligned (coaxial) to extend in the width direction. Furthermore, the roller diameters of the rollers 76 and 86 are substantially the same, the transport surfaces of the endless belts 78 and 84 are substantially in the same plane under the condition that the belt transport surface of the conveyer 80 is placed in a substantially horizontal state (represented by a solid line of FIG. 6A). Because of this, the accumulating unit 56 and the transport unit 58 have an overlapping transport region, with the result that the print stack is transported reliably from the accumulating unit 56 to the transport unit 58. Along with this, the transport direction of the prints P by the conveyer 80 and the conveyer 72 of the accumulating unit 56 is substantially linear, and the transport path for transporting the print stack from the accumulating unit 56 to the transport unit 58 is configured linearly.

As described in detail in the first aspect, when the conveyer 80 of the transport unit 58 transports the print stack to the input unit 60, the conveyer 80 is inclined so that the upstream side thereof is lifted up and the transport direction thereof is directed obliquely downward (represented by a dotted line of FIG. 6A).

It is preferable that the wall portion 88 be erected on the surface of the endless belt 84 of the conveyer 80 of the transport unit 58, and the endless belt 84 further includes a pressing member 84a, in the same way as in the first aspect.

As a preferable aspect, the transport unit 58 includes the curl pressing roller 82.

As described above, the prints P immediately after being discharged from the output roller pair 50 of the processor 18 are largely curled, and the curl amount decreases with the passage of time. Therefore, the respective prints P of the print stack may have different curls.

The curl pressing roller 82 presses the center of the print stack in the width direction from above, thereby suppressing the height of the print stack that increases in volume due to the variation of the curls of the respective prints P while pressing the curls of the prints P to correct them.

Thus, the curl correcting means such as the curl pressing roller 82 can prevent that the print stack is difficult to input into the packing sheet S due to the curls of the prints P, thereby enabling the print stack to be inputted into the packing sheet S more reliably.

Furthermore, the positions of the prints of the print stack are aligned based on the center in the width direction in the accumulating unit 56 in the previous step. Therefore, the edges of the print stack which are pressed with the curl pressing roller 82 remain to be aligned.

In the illustrated example, the curl pressing roller 82 is provided so as to be opposed to the transport surfaces of the endless belts 84, 84 at a position corresponding to the center portion in the width direction of the print stack transported by the endless belts 84, 84. The curl pressing roller 82 is axially supported by one end of the bar-shaped arm 90. The other end of the arm 90 is swingably supported by the fixing shaft 92. The arm 90 is swung by a drive source (not shown), with the result that the curl pressing roller 82 rotates to move up and down with respect to the fixing shaft 92, as represented by an arrow b of FIG. 6A.

The function, action, and the other configurations of the curl pressing roller 82 are as described previously in the first aspect.

The function, action, and the other configurations of the transport unit 58 and the conveyer 80 are also as described previously in the first aspect.

In the illustrated example, as described previously in the first aspect, the input unit 60 includes the conveyer 96, the shutter 98, the guide plate 100, and the two curl pressing rollers 102 axially supported by the guide plate 100 (or a support member thereof). As described in detail later, the packing sheet S is a tubular long transparent sheet, and the slits d that serve as print insertion ports are formed, as shown in FIG. 3.

The conveyer 96 is a known belt conveyer and includes a pair of rollers 104, 104 and the endless belt 106 stretched across the rollers 104, 104, and is placed with the transport direction inclined downward. The roller 104 is axially supported by the support plates (not shown) similar to the support plates 76a, 86a axially supporting the above-mentioned rollers 76, 86. The conveyer 96 is placed at a position where the conveyer 96 is sandwiched in the width direction between two conveyers 80, 80 of the transport unit 58 so that the rotation shaft of the roller 104 on an upstream side of the conveyer 96 of the input unit 60 and the rotation shaft of the roller 86 on a downstream side of the conveyer 80 of the transport unit 58 are aligned (coaxial) to extend in the width direction, in the same way as in the positional relationship between the accumulating unit 56 and the transport unit 58. Furthermore, the roller diameters of the rollers 86 and 104 are set to be substantially the same, and as represented by a broken line of FIG. 6A, the transport surfaces of the endless belts 84 and 106 are substantially in the same plane under the condition that the conveyer 80 of the transport unit 58 is inclined. Because of this, the accumulating unit 58 and the input unit 60 (the conveyers of both) have an overlapping transport region, with the result that the print stack is transported reliably, and the transport paths of the print stack in the transport unit 58 and the input unit 60 can be aligned more preferably.

In the printer 10 in the illustrated example, the print stack is inputted into the print insertion port (slit d) of the packing sheet S owing to the transport of the print stack in a downwardly inclined direction and the gravity fall.

It is preferable that the wall portion 108 be erected on the surface of the endless belt 106 of the conveyer 96 of the input unit 60, and the endless belt 106 further include a pressing member 106a, as described in the first aspect.

Furthermore, the function, action, and the other configurations of the input unit 60 and the conveyer 96 are as described previously in the first aspect.

The guide plate 100 is a plate-shaped member having a width extending over the entire width of the prints P, and is placed at a distance from the endless belt by the maximum height in accordance with the maximum number of the prints P of the print stack and the curl amount of the prints P of the print stack.

In the illustrative example, the guide plate 100 is inclined downward (in a direction approaching the transport surface of the conveyer 96) gradually in the transport direction in a predetermined section on an upstream side (print delivery portion), and then has a shape parallel to the transport surface of the conveyer 96. At the center in the width direction of the guide plate 100, a slit-shaped opening is formed so as to pass the pressing member 106a and the wall portion 108.

The guide plate 100 comes into contact with the upper end of the print stack transported to the input unit 60 to regulate the height thereof, and axially supports the curl pressing rollers 102, and guides the print stack transported from the transport unit 58 below the curl pressing rollers 102 on the upstream side.

As described above, the prints P have a curl shape curved in the width direction with the upper surface in a concave shape. Therefore, the ends in the width direction of the prints P come into contact with the guide plate 100. Thus, the guide plate 100 does not damage an image surface and the like of the prints P to degrade the quality as a product of the prints P.

The function, action, and the other configurations of the curl pressing rollers 102 are as described previously in the first aspect.

The shutter 98 prevents an unwanted fall of the print stack transported from the transport unit 74 more reliably, and functions as a guide member in the width direction and the falling direction at a time of input of the print stack in the packing sheet S.

In the illustrated example, the shutter 98 is a so-called double-doored shutter and includes two doors 98a that are opened from the center toward both sides, as represented by the arrow c of FIG. 2B, with the ends thereof in the width direction axially supported. Furthermore, the doors 98a have a substantially L-shaped cross-sectional shape when seen from the transport direction in an opened state.

With the two doors 98a opened, at least the tip end of the print stack is inserted in the packing sheet S through the slit d. Because of this, the shutter 98 functions as a guide more preferably.

As described previously in the first aspect, the shutter 98 mainly functions as a guide member in the width direction and the falling direction at a time of input of the print stack into the packing sheet S.

In the illustrated example, the shutter 98 is a double-doored shutter in which two doors 98a are opened from the center to both sides, as represented by the arrow c of FIG. 6B.

Thus, in the packer 20 in the illustrated example, after the print stack is transported from the accumulating unit 56 to the transport unit 58, the transport unit 58 is inclined so that the transport paths of the transport unit 58 and the input unit 60 are aligned, and owing to the transport of the print stack in a downwardly inclined direction at an angle that is identical to that of the input unit 60, the print stack is transported to the input unit 60 in the linear transport path. This configuration can prevent the print stack from being disturbed and collapsed during transport, and enable the prints to be inputted into the packing sheet more reliably.

Furthermore, the transport unit 58 and the input unit 60 are aligned to have a linear transport path, with the result that the input of the print stack from the input unit 60 into the packing sheet S is performed continuously from the transport of the print stack from the transport unit 58 to the input unit 60. According to this configuration, the print stack can be inputted into the packing sheet S reliably at a high speed while suppressing the print stack to be disturbed in the transport direction.

Furthermore, as in the illustrated example, owing to the configuration in which the transport unit 58 is provided between the accumulating unit 56 and the input unit 60, and the transport unit 58 is inclined to transport the print stack to the input unit 60. Thus, immediately after the prints of one order are accumulated in the accumulating unit 56 and transported to the transport unit 58, the prints P of the next order can be accumulated in the accumulating unit 56. Therefore, smooth print production with satisfactory efficiency can be performed.

However, the packing apparatus and the packing method of the present invention are not limited to the above, and the step from the accumulation to the input of the prints may be performed with another configuration.

For example, an input guide for guiding the print stack from the transport unit 58 to the slit d of the packing sheet S may be provided in place of the input unit 60 so that the print stack transported by the endless belt 84 of the transport unit 58 and pushed out by the pressing member 84a falls along the input guide to be inputted into the packing sheet S.

Furthermore, an input unit including an input guide may be placed continuously from the accumulating unit 56 without providing the transport unit 58.

Furthermore, for example, the following configuration may be possible. In the accumulating unit 56, an accumulating platform capable of inclining in the input direction of the prints P is provided in place of the conveyer 72. The prints P discharged from the output roller pair 50 are accumulated while being subjected to width shift as described above. The accumulating platform is inclined after the accumulation of the prints P to direct the tip end thereof (end on the downstream side in the transport direction of the prints P) toward the slit d of the packing sheet S, with the result that the accumulated print stack is inputted into the packing sheet S.

Furthermore, as in this embodiment, the print stack is allowed to fall to be inputted into the packing sheet S, with the result that the print pack 12 can be produced without having a complicated apparatus configuration. However, the packing method and the packing apparatus of the present invention are not limited thereto, and the insertion of the print stack in the packing sheet S can be performed in various kinds of embodiments.

For example, the print stack may be inserted in the packing sheet S by pushing out the print stack from the back while a platform for the print stack is kept horizontal. Alternatively, holding means for the print stack may be provided, and the print stack held by the holding means may be inserted in the packing sheet S.

In any case, the positions in the width direction of the prints P are aligned during accumulation of the prints P. Therefore, it becomes possible that the print stack is inserted under the condition of being aligned in a small packing bag to produce a print pack.

Next, the packing sheet supply unit 62 is for supplying the packing sheet S to a position for inputting the prints by the input unit 60, and includes a loading unit of the sheet roll 110, the transport roller pair 112, and transport guide means for the packing sheet S (not shown).

In the packing sheet supply unit 62, the packing sheet S is loaded with the surface having the slits d directed to the input unit 60, as the sheet roll 11 wound in a roll shape, and is transported in a predetermined path by the transport roller pair 112, the transport guide (not shown), and the like.

The transport of the packing sheet S is stopped, when the slit d arrives at a position appropriate for inputting the print stack from the input unit 60 to the packing sheet S, for example, when the slit d arrives at a position slightly below the lower end of the conveyer 96 of the input unit 60.

The opening holding means 64 holds the packing sheet S with a print packing bag portion thereof being hung down, under the condition that a print insertion port (slit d) of the packing sheet S to be formed into a print packing bag is opened upward, and includes grab means 64a and opening means 64b for the packing sheet S.

When the slit d of the packing sheet S arrives at a predetermined position, the grab means 64a grabs the packing sheet S at a position in the vicinity of the slit d so that the opening/closing of the slit d is not interrupted. For example, the grab means 64a grabs both ends of the slit d of the packing sheet S. As the grab means 64a, a known grab tool or the like can be used. Furthermore, the grab force of the grab means 64a may be set to be large enough for sustaining the weight of the bag-shaped packing sheet S hanging down from the grab portion in a state where the prints P are inputted therein.

Furthermore, when the print input in the packing sheet S is completed, the grab means 64a moves the packing sheet S downward so that the slit d of the packing sheet S containing the prints comes to a position corresponding to the seal/cut unit 66, and releases the packing sheet S as soon as seal/cut of the packing sheet S described later is completed, and grabs a predetermined portion (in the vicinity of the slit d) of the packing sheet S supplied as a subsequent print packing bag.

The opening means 64b holds a portion just below the slit d of the packing sheet S (e.g., holding by suction), and moves in a direction (represented by an arrow of FIG. 5) that opens the tubular packing sheet S, thereby opening the slit d of the packing sheet S. Furthermore, it is preferable that the wind is blown to the slit d from above by a fan to enlarge the opening of the slit d, and expand the packing sheet S.

The opening means 64b stops holding the packing sheet S, when the print input in the packing sheet S is completed.

The seal/cut unit 66 fuses the slit d of the packing sheet S to seal the print packing bag in which prints have been inserted, and separates the print packing bag from a long packing sheet S. As a preferable embodiment, as the seal/cut unit 66, a fusing heater capable of concurrently performing thermal fusion and cutting (by melting) of the packing sheet S is used. This heater has a minute convex portion extending in the width direction at the center of the heater (center in the transport direction (vertical direction of FIG. 5) of the packing sheet S).

The feed of the packing sheet S is stopped at a position where the convex portion at the center of the heater is matched with the slit d. Then, the heater of the seal/cut unit 66 is pressed against the packing sheet S, the packing sheet S is sealed (closed) in upper and lower portions of the slit d, and the packing sheet S is cut (by melting) at the slit d with the convex portion at the center of the heater.

Because of this, the lower end of the packing sheet S (lower end of the packing sheet S connected to the sheet roll 110) for storing the next prints P is closed, and the upper end of the packing sheet S storing the prints P of one order is closed and cut, with the result that one print pack 12 is produced.

The seal/cut unit 66 is not limited to the above. The seal/cut unit 66 may include a heat sealer and a cutter separately and perform sealing of the slit d of the packing sheet S and cutting of the print pack 12 from the packing sheet S separately. Alternatively, the seal/cut unit 66 may attach the slit d with an adhesive.

The print input load alleviating unit 68 includes a print input load alleviating platform 69 for supporting a lower portion (lower end) of a bag portion of the packing sheet S held by the opening holding means 64 under the condition of lifting up the lower portion, at a time of input of the prints by the input unit 60. The print input load alleviating platform 69 (hereinafter, merely referred to as an "alleviating platform") includes a base 69a, a shock absorbing member 69b, and a shaft 69c.

The base 69a is a plate having a width nearly the same as that of the packing sheet S, and the shock absorbing member 69b is provided on the top surface of the base 69a (support surface of the packing sheet S). The shock absorbing member 69b prevents the damage of edges of the prints P when prints P are inputted into the packing sheet S, and suppresses the disturbance of the prints P caused by rebounding. The base 69a is placed so that the surface of the shock absorbing member 69b is placed above the lower portion of the packing sheet S when the packing sheet S hangs down in a state of being grabbed by the grab means 64a. Thus, the alleviating platform 69 of the print input load alleviating unit 68 supports the print packing bag with the bottom thereof being lifted up.

The base 69a is swingable with its one side (on the right side of the illustrated example) extending in the width direction supported by the shaft 69c. The base 69a is capable of swinging between a first position (represented by a solid line of FIG. 5) at which the base 69a supports the lower portion of the bag portion of the packing sheet S at a time of print input, and a second position (represented by a broken line of FIG. 5) at which the base 69a releases the support of the bag portion of the packing sheet S after print input and retracts from the transport path of the print pack 12.

The print stack is inputted into the packing sheet S under the condition that the lower portion of the packing sheet S is supported by the alleviating platform 69 of the print input load alleviating unit 68, with the result that the rupture of the packing sheet S can be prevented, and the friction load between the prints P and the packing sheet S caused by the input of the prints P can be alleviated. Therefore, the print stack can be inserted in the bag portion of the packing sheet S reliably at a high speed without disturbing the print stack in the input direction greatly.

At a time of input of the print stack into the packing sheet S, the alleviating platform 69 of the print input load alleviating unit 68 supports the bottom of the packing sheet S at the first position (represented by the solid line of FIG. 5) at which the support surface becomes horizontal.

After print input, the alleviating platform 69 is inclined along with the downward movement of the packing sheet S caused by the grab means 64a of the opening holding means 64. When the slit d of the packing sheet S comes to the position of the seal/cut unit 66, the packing sheet S is sealed and cut. At this time, the alleviating platform 69 is away from the packing sheet S or hardly supports the packing sheet S even if the alleviating platform 69 is in contact therewith, and the prints inside the packing sheet S have arrived at the bottom of the packing sheet S under the condition of being aligned. Therefore, the prints P are not sandwiched in the sealed portion (in the vicinity of the slit d).

After that, the alleviating platform 69 of the print input load alleviating unit 68 further moves, and retracts from the path in which the print pack 12 obtained by cutting the packing sheet S by the seal/cut unit 66 falls to the product storage unit 70a (second position represented by the dotted line of FIG. 5). Alternatively, the print input load alleviating platform 69 may be slightly inclined so that the print pack 12 is guided to the product storage unit 70a with the support surface.

Next, the function of the packer 20 in the printer 10 will be described.

As described above, the prints P are transported through the discharge unit 48 of the processor 18, and are discharged and accumulated in the accumulating unit 56 (on the endless belt 78 of the conveyer 72) by the output roller pair 50.

In the accumulating unit 56, the accumulated prints P are sandwiched between the two width shift guides 74 and aligned in the width direction at a predetermined timing (e.g., on one print basis).

Thus, owing to the width shift in the accumulating unit 56, the print stack can be inputted under the condition of being stacked neatly without any disturbance. Therefore, the print stack can be stored reliably under the condition of being stacked neatly even in a small packing material (bag) in accordance with the print size, maximum storage number, and the like.

In the packer 20a, when it is detected that the prints P of one order (or the maximum number of the prints that can be stored in the print pack 12) are accumulated in the accumulating unit 56 based on, for example, sort information, the conveyer 72 of the accumulating unit 56 and the conveyer 80 of the transport unit 58 are driven in synchronization with each other, and the print stack is transported from the accumulating unit 56 to the transport unit 58.

When the print stack is transported to the transport unit 58, the curl pressing roller 82 moves downward to press the print stack from above so as to correct curls. Then, the roller 86 on the upstream side is lifted up, so that the conveyer 80 is inclined as represented by a dotted line in FIG. 6A.

On the other hand, the packing sheet S is put in a stand-by state under the condition of being hanged down with a portion in the vicinity of the slit d grabbed by the grab means 64a and the slit d opened by the opening means 64b. At this time, the lower end of the packing sheet S is supported under the condition of being slightly lifted up by the alleviating platform 69 of the print input load alleviating unit 68.

When the conveyer 80 of the transport unit 58 is inclined downwardly at an angle which is identical to that of the conveyer 96 of the input unit 60, the shutter 98 is opened, and then the conveyers 80 and 96 are driven in synchronization with each other. Thus, the print stack is transported from the transport unit 58 to the input unit 60, and subsequently, transported obliquely downward by the input unit 60, with the result that the print stack is inputted into the packing sheet S through the opened slit d. At this time, the shutter 98 is opened, so that the doors 98a of the shutter 98 have at least tip ends thereof inserted in the packing sheet S, and function as a guide for inputting the print stack.

The transport of the print stack from the transport unit 58 to the input in the packing sheet S through the input unit 60 is not limited to the above-mentioned continuous transport, and may be performed intermittently between the transport unit 58 and the input unit 60. For example, the following transport may be performed. The transport unit 58 is inclined, and the print stack is transported from the transport unit 58 to the input unit 60. Then, the transport in the input unit 60 (conveyer 96) is stopped once at a time when the wall portion 108 comes to a predetermined position on an upstream side from the shutter 98, and the shutter 98 is opened. Then, (or in synchronization therewith), the transport by the conveyer 96 is restarted, with the result that the print stack is inputted into the packing sheet S through the slit d.

When the print stack (prints P of one order) is stored in the packing sheet S, the opening holding means 64 releases the packing sheet S (or further stops the fan). Then, the sheet roll 110 rotates to send the packing sheet S to the position where the slit d arrives at the seal/cut unit 66. At this time, the grab means 64a moves downward while grabbing the packing sheet S. Furthermore, the print input load alleviating platform 69 also moves downward to leave the packing sheet S.

When the slit d moves to a predetermined position, the seal/cut unit 66 fuses the packing sheet S and cuts the packing sheet S by melting. In addition, the grab means 64a releases the packing sheet S, and a completed product (i.e., the print pack 12) with the opening sealed is stored in the product storage unit 70.

Next, a packing apparatus according to a third aspect of the present invention will be described with reference to FIGS. 1, 3, 8A, and 8B.

One embodiment of the packing apparatus according to the third aspect of the present invention is applicable to the printers 10 and 10a shown in FIGS. 1 and 5.

Hereinafter, although the packer 20 applied to the printer 10 shown in FIG. 1 will be described as a representative example of the packing apparatus of this aspect, the present invention is not limited thereto.

Also in this aspect, the packer 20 is a packing apparatus of the present invention, which accumulates the prints P for each order and packs them in a packing material, and includes an accumulating unit 56, a transport unit 58, an input unit 60, a packing sheet supply unit 62 for supplying the packing sheet S that is a packing material, opening holding means 64, a seal/cut unit 66, and a product storage unit 70.

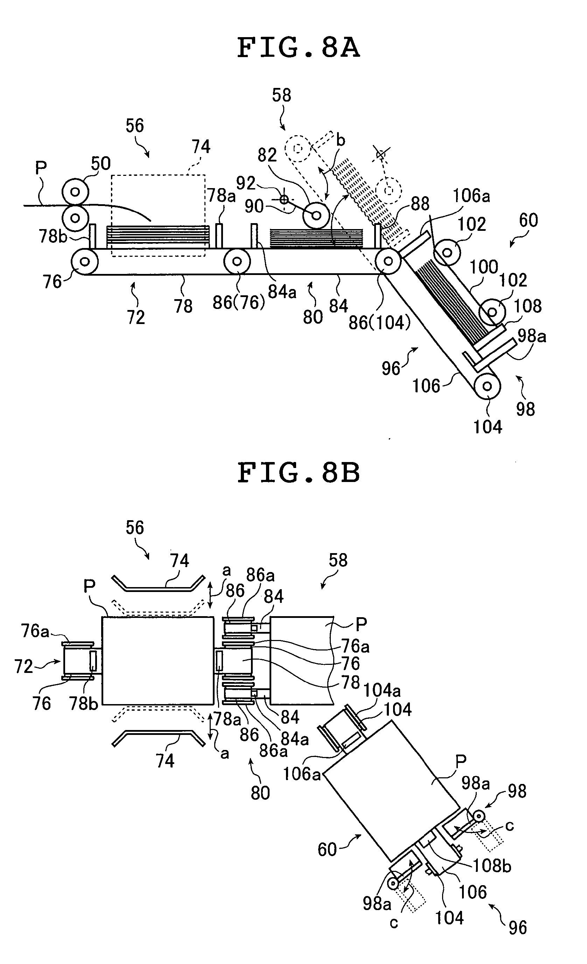

FIGS. 8A and 8B are partial schematic views of one embodiment of the packing apparatus according to the third aspect of the present invention. FIGS. 8A and 8B are a front view and a plan view specifically showing schematic configurations of the accumulating unit 56, the transport unit 58, and the input unit 60 of the packer 20 shown in FIG. 1, respectively.

Herein, although the accumulating unit 56, the transport unit 58, and the input unit 60 in FIGS. 8A and 8B are shown in a different manner from the accumulating unit 56, the transport unit 58, and the input unit 60 shown in FIGS. 2A and 2B, they are basically configured in the same manner as those in FIGS. 2A and 2B. Therefore, the similar description will be omitted, and the description required in this aspect (particularly, the description of the input unit) will be mainly given. Thus, it is appreciated that this aspect, more specifically, the embodiment shown in FIGS. 8A and 8B are also applicable to the packer 20a and the printer 10a shown in FIG. 5, in addition to the packer 20 and the printer 10 shown in FIG. 1.

As described previously in the first aspect, the input unit 60 transports the print stack received from the transport unit 58 in the downwardly inclined direction, thereby inputting it into the packing sheet S, and includes a conveyer 96, a shutter 98, a guide plate 100, and two curl pressing rollers 102 axially supported by the guide plate 100.

The conveyer 96 is a belt conveyer including a pair of rollers 104, an endless belt 106 stretched around the rollers 104, a pressing member 106a and a wall portion 108 erected on the endless belt 106, and is placed so that the transport path is downwardly inclined.

The rollers 104 are axially supported by the support plates 104a which are the same as those described above. Furthermore, the conveyer 96 is interposed between the two conveyers 80 so that the rotation shaft of the roller 104 on the upstream side of the conveyer 96 of the input unit 60 is aligned with the rotation shaft of the roller 86 on the downstream side of the conveyer 80 of the transport unit 58 in the width direction as in the above-mentioned accumulating unit 56 and transport unit 58. This arrangement enables the transport regions of the transport unit 58 and the input unit 60 (conveyers of both the units) to overlap each other to ensure reliable transport, and the print stack to be transported through the transport unit 58 and the input unit 60 along a more advantageous linear transport path.

In the illustrated printer 10, the print stack is input into the packing sheet S owing to the transport in the downwardly inclined direction and the gravity.

The pressing member 106a in the shape of a rectangular parallelepiped (wall) is erected on the surface of the endless belt 106 of the conveyer 96. The pressing member 106a presses the print stack from the upstream side in the transport direction when the print stack is transported on the conveyer 96 to be input into the packing sheet S.

The packing apparatus of this aspect which is provided with the pressing member 106a (pressing means) ensures that the print stack is transported in the input unit 60 and is input into the packing sheet S more neatly.

There is no particular limit to the height of the pressing member 106a. However, in order to reliably press all the prints P of the print stack, it is preferable that the pressing member 106a has a height larger than the maximum thickness of the print stack in accordance with the maximum number of the prints P inserted in the print pack 12 and the like. In the case of providing a member for regulating the height of the print stack, such as the guide plate 100 which regulates the height of the print stack by pressing curls of the prints P as in the illustrated input unit 60, the height of the pressing member 106a may be set to be higher than that of the regulating member.

Furthermore, there is no particular limit to the shape of the pressing member 106a, and various shapes such as a bar shape (column shape) can be used instead of the rectangular parallelepiped shape (wall shape) as in the illustrated example.

Furthermore, in order to prevent the print stack being transported from collapsing and from falling inadvertently, a wall portion 108 is erected on the surface of the endless belt 106 of the conveyer 96 of the input unit 60. The height of the wall portion 108 may be determined in the same manner as in the pressing member 106a.

In the conveyer 96 of the input unit 60, the position of the pressing member 106a is determined, and the drive thereof is controlled such that, when the input unit 60 receives the print stack from the transport unit 58, the pressing member 106a does not interfere with its reception in the input unit 60 and the wall portion 108 is positioned on the downstream side from the print stack (and preferably, comes into contact with the forward end of the print stack); and furthermore, when the input unit 60 has received the print stack, the pressing member 106a is positioned on the upstream side of the print stack and the pressing member 106a and the wall portion 108 are both positioned on the upper surface of the conveyer 96.

Preferably, the position of the pressing member 106a is determined and the drive of the conveyers 80 and 96 are controlled such that the pressing member 106a appears from the lower surface on the upper surface of the conveyer 96, in synchronization with the movement of the pressing member 84a of the conveyer 80 of the transport unit 58 from the upper surface to the lower surface of the conveyer 80 (optionally after a slight delay).

In the present invention, the transport speed of the conveyer 96 (in the input unit 60) when the print stack is input into the packing sheet S is equal to or higher than the speed at which the print stack free-falls on the conveyer 96.

This setting positively prevents the print stack from collapsing downward due to the free fall during its input into the packing sheet S and enables the print stack to be input into the packing sheet S more reliably in a neatly stacked state. Furthermore, even in the case where upper prints of the print stack cannot follow the transport speed of the conveyer 96, and collapse on the upstream side, those prints are pressed by the pressing member 106a and hence transported without fail. Therefore, the print stack can also be input into the packing sheet S more reliably in a neatly stacked state.

The upper limit of the transport speed of the conveyer 96 is not particularly limited.

However, when the speed at which the print stack is transported, that is, the speed at which the print stack is input into the packing sheet S (packing material) is too high, the print stack is input into the packing sheet S with large momentum. Therefore, the print stack may damage the packing sheet S, or the print stack rebounds from the bottom or other portion of the packing sheet S, so that some of the prints may get out of the packing sheet.

In consideration of this point, the transport speed of the conveyer 96 is preferably about 1 to 2000 mm/sec.

Furthermore, there is no particular limit to the angle of the conveyer 96 (with respect to the horizontal direction), i.e., the angle (elevation angle) at which the print stack is input into the packing sheet S, as long as the print stack can be input in the downwardly inclined direction.

However, when the angle of the conveyer 96 is too small, the print stack may collide with the packing sheet S surface, which may distort the posture of the packing sheet S to prevent stable insertion of the print stack.

In consideration of this point, the angle of the conveyer 96 at which the print stack is input into the packing sheet S is preferably 45° to 90° and more preferably 50° to 90°.

The guide plate 100 is a plate member spaced apart from the endless belt by a length determined in accordance with the maximum number of prints in the print stack and the maximum height of curls.

In the illustrated example, the guide plate 100 gradually inclines downward along the transport direction in the upstream side (print-receiving portion) and is then made parallel to the transport surface of the conveyer 96. At the center in the width direction of the guide plate 100, is formed a slit-shaped opening for passing the pressing member 106a and the wall portion 108 therethrough.

The guide plate 100 comes into contact with the upper end of the print stack transported to the input unit 60 to regulate the height thereof, axially supports the curl pressing rollers 102, and guides the print stack transported from the transport unit 58 below the curl pressing roller 102 on the upstream side. As described above, since the prints P are curled in a concave shape, the ends in the width direction of the prints P come into contact with the guide plate 100. Thus, the guide plate 100 does not damage an image surface and the like of the prints P to degrade the product quality.

When the print stack is transported to the transport unit 58, the curl pressing roller 82 moves downward to press the print stack from above, thereby correcting curls. Then, the roller 86 on the upstream side is lifted up to incline the conveyer 80 as represented by broken lines in FIG. 8A.

When the conveyer 80 of the transport unit 58 is aligned with the conveyer 96 of the input unit 60, the shutter 98 is opened. Then, the conveyers 80 and 96 are driven in synchronization to transport the print stack from the transport unit 58 to the input unit 60. Furthermore, the print stack is transported in the downwardly inclined direction in the input unit 60 to be input into the packing sheet S through the opened slit d. Thus, in the illustrated example, the transport speeds of the conveyers 80 and 96 (the transport unit 58 and the input unit 60) are equal to or higher than the speed at which the print stack on the conveyer 96 free-falls.

In this process, as described above, at least the forward ends of the doors 98a of the shutter 98 are inserted in the packing sheet S (through the slit d), and the shutter 98 functions as a guide for inputting the print stack.

According to the present invention, the transport of the print stack from the transport unit 58 to the input into the packing sheet S through the input unit 60 is not limited to the above-mentioned continuous transport.

For example, the following transport may be performed. The transport in the input unit 60 (conveyer 96) is stopped at a time when the wall portion 108 comes to a predetermined position, and the shutter 98 is opened. Then, (or in synchronization), the transport on the conveyer 96 is restarted to input the print stack into the packing sheet S through the opened slit d. In this case, the speed at which the print stack is transported in the input unit 60 (on the conveyer 96) only in the process of its input into the packing sheet S may be set to be equal to or higher than the speed at which the print stack on the conveyer 96 free-falls.

Thus, in the packing apparatus of the present invention, the print stack is transported in the downwardly inclined direction to be input into the packing sheet S (packing material). In addition, as described above, the speed at which the print stack is transported on the conveyer 96 (in the input unit 60) during its input into the sheet S is set to be equal to or higher than the speed at which the print stack on the conveyer 96 (transport means) free-falls, and the packing apparatus includes the pressing member 106a for pressing the print stack from the upstream side.

Thus, the print stack can be reliably prevented from collapsing downward due to gravity during its input into the packing sheet S. Furthermore, even in the case where upper prints of the print stack cannot follow the transport speed of the conveyer 96 to come close to collapsing on the upstream side, those prints are pressed with the pressing member 106a to be transported without fail. Therefore, the print stack can be input in a neatly stacked state without being out of alignment, and can be stored without fail in a neatly stacked state even in a small packing material (bag) selected in accordance with the print size, the maximum storage number, and the like.

In the above-mentioned example, although the packer 20 includes the accumulating unit 56, the transport unit 58, and the input unit 60, the present invention is not limited thereto. For example, the packer 20 may include only the accumulating unit 56 and the input unit 60, without having the transport unit 58. In this case, the input unit 60 may be initially inclined downwardly along the transport path, or the input unit 60 may be configured so that it receives the print stack in a horizontal state and is then inclined downwardly along the transport path thereby inputting the print stack into the packing sheet S.

Alternatively, the packer 20 may be configured to include only the input unit 60 accumulating the prints P discharged through the output roller pair 50 in a horizontal state so that, after having accumulated the prints P of one order, the input unit 60 is inclined downwardly along the transport path to input the print stack into the packing sheet S. In this case, it is preferable that the input unit 60 have means for aligning the accumulated prints P in the width direction such as the width shift guide 74 of the accumulating unit 56 in the illustrated example.

Next, a packing apparatus according to a fourth aspect of the present invention will be described with reference to FIGS. 3, and 9 to 13.

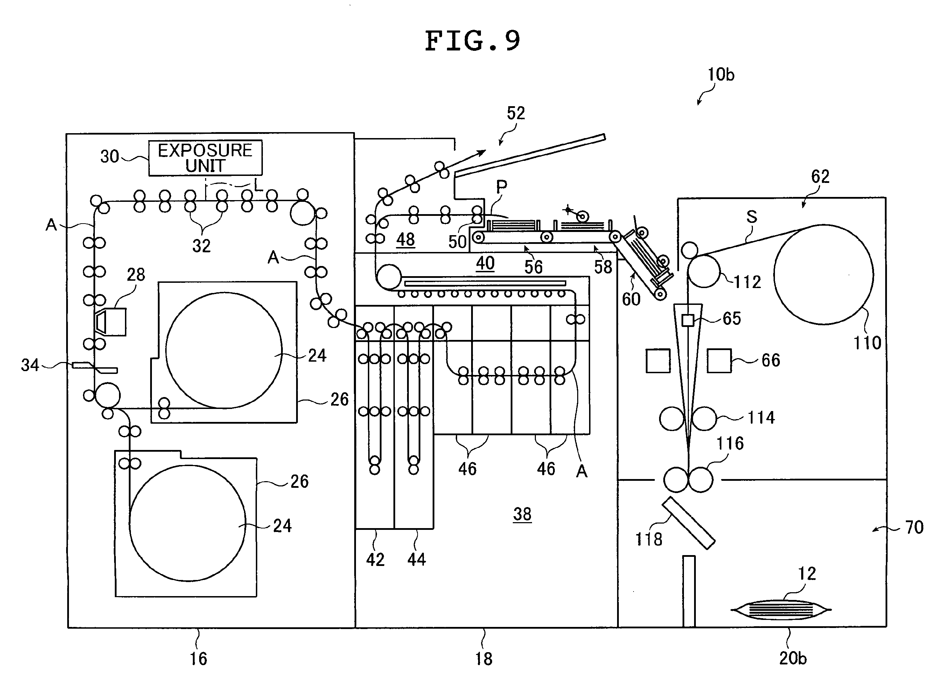

FIG. 9 is a schematic view showing one example of a printer using one embodiment of the packing apparatus according to the fourth aspect of the present invention.

As described above, a printer 10b shown in FIG. 9 includes an image recorder 16, a processor 18, and a packer 20b that is one example of the packing apparatus of this aspect.

The printer 10b shown in FIG. 9 has the same configuration as that of the printer 10 shown in FIG. 1, except that the packer 20b is provided in place of the packer 20. Furthermore, the packer 20b shown in FIG. 9 also has the same configuration as that of the packer 20 shown in FIG. 1, except that opening holding means 65 is provided in place of the opening holding means 64. Like components are denoted with like reference numerals, and the detailed description thereof will be omitted.

In the illustrated printer 10b, prints P larger than a predetermined size (e.g., prints larger than a postcard size) are not transported to the packer 20b but are discharged from the discharge unit 48 to a large-size print discharge unit 52 placed above. Furthermore, in the illustrated printer 10b, so-called broke such as the forward end (roll forward end) and a splice portion (intermediate connecting portion) of a photosensitive material roll 24, which cannot be used for producing the prints P, is also discharged to the large-size print discharge unit 52. The present invention is not limited thereto. In the case of a configuration having no large-size print discharge unit 52, the broke may also be discharged to the packer 20b. This will be described in detail later.

Furthermore, the switching between the transport paths to the packer 20b and the large-size print discharge unit 52 may be performed by a known method such as a method using a switching guide.

In this aspect, the packer 20b is a packing apparatus which accumulates the prints P for each order and packs them in a packing material, and includes an accumulating unit 56, a transport unit 58, an input unit 60, a packing sheet supply unit 62 for supplying the packing sheet S that is a packing material, the opening holding means 65, a seal/cut unit 66, and a product storage unit 70.

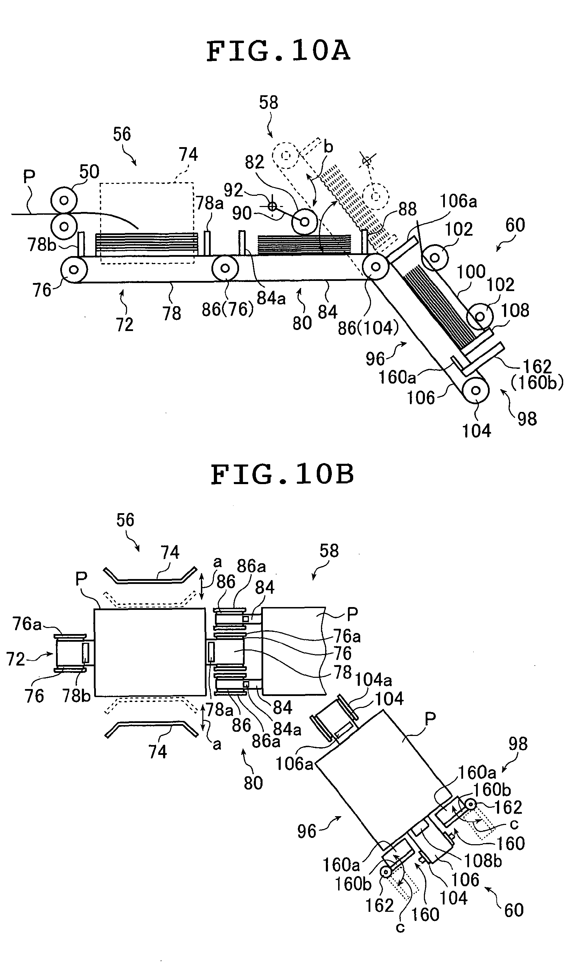

FIG. 10A and FIG. 10B are a front view and a plan view specifically showing schematic configurations of the accumulating unit 56, the transport unit 58, and the input unit 60 of the packer 20b in this aspect, respectively.

The accumulating unit 56, the transport unit 58, and the input unit 60 of the packer 20b of this aspect in FIGS. 10A and 10B are shown in a different manner from that of the accumulating unit 56, the transport unit 58, and the input unit 60 of the third aspect shown in FIGS. 8A and 8B. However, they have basically the same configuration, so that the similar description will be omitted, and the description required for this aspect, in particular, the description of the shutter 98 in the input unit 60 will be mainly given. Thus, it should be appreciated that this aspect, specifically, the embodiment shown in FIGS. 10A to 12 are also applicable to the packer 20 and the printer 10 shown in FIG. 1, and the packer 20a and the printer 10a shown in FIG. 5.

As previously described in the third aspect, the input unit 60 transports the print stack received from the transport unit 58 in the downwardly inclined direction, thereby inputting the print stack into the packing sheet S. In the illustrated example, the input unit 60 includes a conveyer 96, a shutter 98, a guide plate 100, and two curl pressing rollers 102 axially supported by the guide plate 100.

The conveyer 96 is a belt conveyer including a pair of rollers 104, an endless belt 106 stretched around the rollers 104, and a pressing member 106a and a wall portion 108 preferably erected on the endless belt 106, and is placed so that the transport path is downwardly inclined.

In the illustrated printer 10b, the print stack is input into the packing sheet S while being guided by the shutter 98 (doors 160) to be described later, owing to the transport in the downwardly inclined direction and the gravity.

In the illustrated example, the pressing member 106a in the shape of a rectangular parallelepiped (wall) is preferably erected on the surface of the endless belt 106 of the conveyer 96. The pressing member 106a presses the print stack from the upstream side in the transport direction, when the print stack is transported on the conveyer 96 to be input into the packing sheet S.

Owing to the presence of the pressing member 106a (pressure means), the transport of the print stack in the input unit 60, and its input into the packing sheet S can be performed without fail more neatly.

The shutter 98 mainly functions as a guide member that guides the print stack in the width direction and the fall direction at the time of inputting the print stack into the packing sheet S.

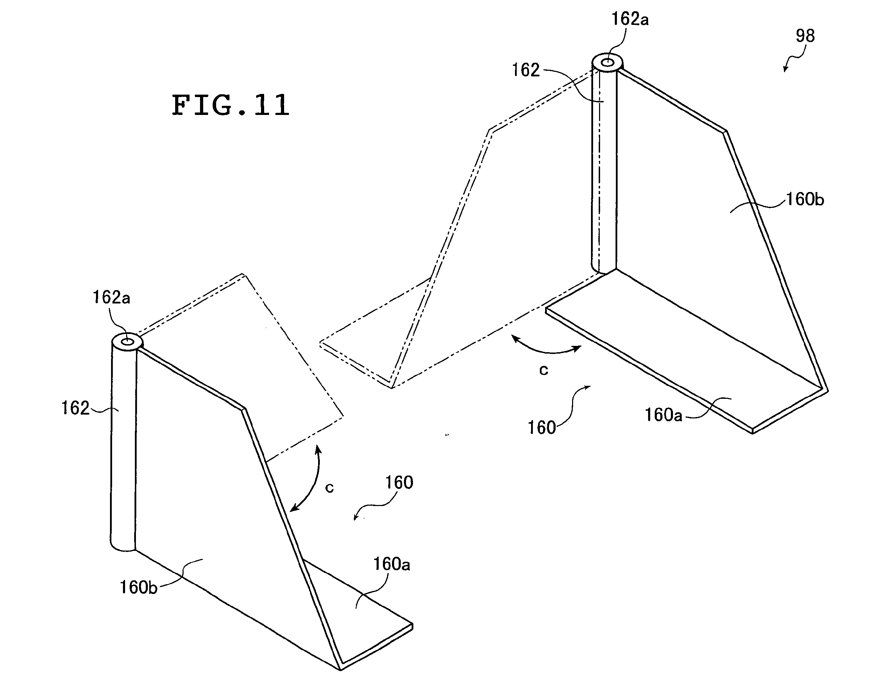

FIG. 11 is a schematic perspective view showing the opened shutter 98. In FIG. 11, a chain double-dashed line schematically represents the closed shutter 98. In the illustrated example, the shutter 98 is a double-doored shutter composed of two doors 160 that are opened from the center to both sides, as represented by an arrow c in FIGS. 10B and 11, with ends in the width direction axially supported.

Each door 160 is a plate member which has a substantially L-shaped cross-section when seen in the transport direction in an opened state, and which includes a bottom portion 160a supporting (guiding) the print stack to be input into the packing sheet S from below, and a side wall 160b erected on the bottom portion 160a (in FIGS. 2A, 2B, 6A, 6B, 8A, and 8B showing other aspects, the door is represented by reference numeral 98a) .

A cylindrical column 162 is fixed to a base end (outer end in the width direction in a closed state/upstream end in the transport direction in an opened state), and the column 162 having a rotation axis 162a in its center axially supports the door 160. The column 162 is placed outside in the width direction with respect to the transport path of the print stack.

In the ordinary state, the shutter 98 closes the transport path of the print stack with the side wall 160b of each door 160, as represented by the solid lines in FIG. 10B and the chain double-dashed lines in FIG. 11. On the other hand, when the print stack is input into the packing sheet S, both the doors 160 swing from the inside to the outside on the rotation shafts 162a to open the double-doored shutter 98 as represented by the chain double-dashed lines in FIG. 10B and the solid lines in FIG. 11. Furthermore, when the shutter 98 is opened, the side walls 160b become (substantially) parallel to the transport direction of the print stack on the conveyer 106.

In this way, when the print stack is input into the packing sheet S, the bottom portion 160a functions as a guide member supporting the print stack from below (i.e., preventing an unwanted fall of the print stack to guide it along the input direction), and the side wall 160b functions as guide members in the width direction of the print stack.

In the illustrated example, the side wall 160b has preferably a tapered shape in which the height of the other end (end opposite to the base end) of the door 160 gradually decreases. This will be described in detail later.

In the packer 20b, the input unit 60 and the packing sheet supply unit 62 are configured in such a manner that, when the shutter 98 is opened with a slit d (insertion port for the print stack) to be described later, of the packing sheet S shown in FIG. 3 opened, the forward ends of the doors 160 are inserted in the slit d (i.e., the input unit 60 and the packing sheet supply unit 62 are configured so that the forward ends of the doors 160 are inserted in a packing material owing to the opening of the shutter).

A sheet roll 110 wound in a roll shape is loaded in the packing sheet supply unit 62 with the surface having the slits d facing the input unit 60, and the packing sheet S is transported along a predetermined path with a guide roller pair 112, a transport roller pair 114, and the like.

The transport of the packing sheet S stops at a time when the slit d reaches a predetermined position appropriate for the input of the print stack from the input unit 60, for example, when the slit d comes to a position slightly below the lower end of the conveyer 96 of the input unit 60.

The opening holding means 65 opens the slit d of the packing sheet S so as to input the print stack into the packing sheet S (print pack 12).

In the illustrated example, when the slit d is placed at a predetermined position appropriate for the input, the opening holding means 65 holds the packing sheet S so as to pinch two long sheets constituting the packing sheet S immediately below the slit d and in the vicinity of both ends in the width direction of the packing sheet S (e.g., positions e shown in FIG. 3) and then moves it inside, thereby opening the slit d.

In the present invention, the opening means for the slit d is not limited thereto, and various known methods can be used, such as a means for opening the slit d by sucking a portion below the slit d with a suction cup and pulling it, and a means for opening the slit d with a jig.

When the slit d of the packing sheet S is opened as described above, it is preferable that air from a fan or the like be blown to the slit d from above to enlarge the opening of the slit d and expand the packing sheet S.

In this process, a small amount of air from a fan or the like is blown to the slit d from above toward the packing sheet S so that the opening of the slit d can be enlarged more advantageously to expand the packing sheet S.

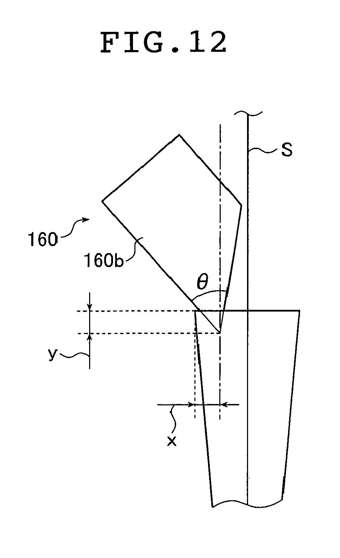

The double-doored shutter 98 is opened with the slit d of the packing sheet S opened, as shown in FIG. 11. When the shutter 98 is opened, the forward ends of the doors 160 are inserted into the opened packing sheet S as schematically shown in FIG. 12.

Thus, the print stack can be input into the packing sheet S through the slit d without fail while the lower portion of the print stack transported on the conveyer 96 to be input into the packing sheet S is guided by the bottom portions 160a, and the print stack in the width direction is guided by the side walls 160b. Furthermore, by opening the double-doored shutter 98, the doors 160 can also be smoothly inserted into the slit d without fail.

According to the present invention, the side wall of the door 160 has a shape in which the height in at least its forward end gradually decreases toward the downstream side. In the illustrated example, the forward end is preferably tapered as described above.

In consideration of the guiding performance in the width direction, it is preferable that the side wall 160b have a height corresponding to the maximum height of the print stack over the entire region. However, in such a shape, as is apparent from FIG. 12, the upper end of the side wall 160b comes into contact with and presses the packing sheet S to cause inconveniences such as hindering the insertion of the door 160 in the packing sheet S, making the input of the print stack unstable, and may also damage the packing sheet S.

In contrast, according to the present invention, the side wall 160b has a shape in which the height of the forward end gradually decreases toward the downstream side, and the forward end is preferably tapered as in the illustrated example. This configuration prevents the contact between the side walls 160b and the packing sheet S and ensures that the forward ends of the doors 160 are inserted in the slit d of the packing sheet S and hold the opening of the slit d, which enables the print stack to be stably input.

When the forward end of the side wall 160b is tapered, there is no particular limit to the taper angle (taper angle θ in FIG. 12). As described above, in consideration of the guiding in the width direction, it is preferable that the side wall 160b guide the print stack until the end of the input. Furthermore, in a tapered region, the upper portion and the lower portion of the print stack have different friction forces with respect to the side walls 160b, which causes the print stack to be likely to collapse. Therefore, the tapered regions of side walls 160b in the door 160 are preferably short.

In consideration of this point, the taper angle of the tapered region of the side wall 160b is preferably 30° or more, and more preferably 45° to 60°.

Furthermore, according to the study made by the inventor of the present invention, in order to input the print stack into the packing sheet S more reliably and neatly, it is preferable that the tapered region (upper end thereof) of the side wall 160b with the shutter 98 opened extend in a state close to a vertical direction represented by a chain line shown in FIG. 12, and it is particularly preferable that the tapered region extend at an angle of ±15° with respect to the vertical direction.

In this aspect, the length of the door 160 inserted in the packing sheet S (packing material) is not particularly limited, as long as at least the forward end thereof is inserted therein.

However, when the length is too small, the door 160 comes away from the packing sheet S, which may cause the print stack to be unstably input into the packing sheet S. On the contrary, when the length is too large, the doors 160 reduce the degree of freedom with which the print stack is input/falls into the sheet S during the inputting operation, and more specifically, the doors 160 may hinder the print stack from being input in a well-aligned and stable manner.

In consideration of this point, the length of the door 160 inserted in the packing sheet S is preferably 3 to 15 mm in the horizontal direction (x-direction in FIG. 12), and 3 to 15 mm in the vertical direction (y-direction in FIG. 12). It is particularly preferable that the length be about 10 mm ± 5 mm both in the horizontal direction and the vertical direction.

As described above, in the packing sheet supply unit 62, the packing sheet S is fed from the sheet roll 110 and transported along a predetermined path with the guide roller pair 112, the transport roller pair 114, and the like. The transport of the packing sheet S stops when the slit d reaches a predetermined position appropriate for the input of the print stack from the input unit 60, for example, when the slit d comes to a position slightly below the lower end of the conveyer 96 of the input unit 60.

When the transport of the packing sheet S stops, the opening holding means 65 opens the slit d of the packing sheet S as described above. Then, air from a fan is preferably blown to the slit S to enlarge the slit d, thereby expanding the packing sheet S.

In the illustrated example, the packing sheet S is in a stand-by state in which the packing sheet S is suspended from the guide roller pair 12 while its lower portion is guided by the transport roller pair 114 with its lower end sealed as described later and the slit d is opened by the opening holding means 65.

On the other hand, as described above, the prints P accumulated in the accumulating unit 56 (on the conveyer 72) through the output roller pair 50 of the discharge unit 48 of the processor 18 are aligned in the width direction by the width shift guide 74 to form a print stack. Then, the print stack is transported from the accumulating unit 56 to the transport unit 58, and curls of the transport stack are corrected with the curl pressing roller 82 in the transport unit 58. Then, the roller 86 on the upstream side is lifted up to incline the conveyer 80 as represented by a broken line in FIG. 10A.

When the conveyer 80 of the transport unit 58 is aligned with the conveyer 96 of the input unit 60, the double-doored shutter 98 is opened. As described above, the forward ends of the doors 160 are thus inserted in the slit d of the opened packing sheet S. As already mentioned, the forward ends of the doors 160 can be smoothly inserted in the packing sheet S without fail by opening the doors on both sides.

Then, the conveyers 80 and 96 are driven in synchronization to transport the print stack from the transport unit 58 to the input unit 60, where the print stack is transported in the downwardly inclined direction to be input into the packing sheet S through the opened slit d. In this process, the forward ends of the doors 160 are inserted in the packing sheet S, while the bottom portions 160a of the doors 160 guide the print stack from below and their side walls 160b guide the print stack in the width direction. Therefore, the print stack can be input into the packing sheet S without fail in a well-aligned manner.

When the print stack (prints P of one order) is put in the packing sheet S, the opening holding means 65 releases the packing sheet S (or further the fan is stopped). Then, the sheet roll 110 rotates to feed the packing sheet S to a position where the slit d reaches the seal/cut unit 66.

Next, a heater, for example, of the seal/cut unit 66 is pressed against the packing sheet S to seal (close) the packing sheet S in upper and lower portions of the slit d. The packing sheet S is (melt and) cut at the slit d with a convex portion at the center of the heater, thereby obtaining a finished print pack 12.

The print pack 12 containing a bundle of the prints P is transported below by the transport roller pairs 114 and 116, and guided by the guide 118 to be stored in the product storage unit 68.

As described above, each of the illustrated printers 10, 10a, and 10b has the large-size print discharge unit 52, and so-called broke such as the forward end of the photosensitive material roll 24, an intermediate connecting portion (splice portion) thereof, a condition maintaining print (calibration print), and the like are also discharged to the large-size print discharge unit 52.

However, print producing apparatuses (printers) with the packers 20, 20a, and 20b which are not capable of producing large-size prints do not have the large-size print discharge unit 52. Therefore, it is also necessary to discharge such broke to the packers 20, 20a, and 20b. The function thereof will be described below by taking the printer 10b and the packer 20b having no large-size print discharge unit 52 as a typical example.

It is assumed for example that the width of the photosensitive material roll 24 is 89 mm, and the feed length corresponding to a print to be produced is 127 mm (print size: 89 x 127 mm). First, in the case of the forward end of the photosensitive material roll 24, in the image recorder 16, a photosensitive material is taken out of the magazine 26 and the forward end of the roll is detected. The forward end is cut with the cutter 34 into a size that is equal to or smaller than the feed length and equal to or longer than the minimum transport length, and sent to the sub-scanning transport roller pair 32.

Then, as in ordinary image recording, the photosensitive material is irradiated with a modulated light beam L from the exposure unit 30 while being transported in the sub-scanning direction by the sub-scanning transport roller pair 32 to thereby make a record indicating that the print (photosensitive material A) is a roll forward end (e.g., "this is not a product but a roll forward end") (a latent image is formed). In the case of the photosensitive material A (printing paper), the forward end may be broken and this record may be illegible even after development. Therefore, this record is preferably made several times at predetermined intervals.

Then, the roll forward end of the photosensitive material A with an image recorded thereon is transported to the processor 18. As in the ordinary prints P, the roll forward end is developed in the development unit 38, dried in the drying unit 40, and transported to the packer 20b. In the packer 20b, the print P at the forward end is handled as one order, and is transported to the accumulating unit 56, the transport unit 58, and the input unit 60 in this order, as described above. Then, the print P is input into the packing sheet S. The packing sheet S containing the print P at the forward end is sealed/cut, and discharged to the product storage unit 70 as the print pack 12.

The print pack 12 is treated as a print pack of broke, for example by an operator of a laboratory or the like.

Then, in the case of the splice portion of the photosensitive material roll 24, it is also assumed that the width of the photosensitive material roll 24 is 89 mm and the feed length thereof is 127 mm. First, in the image recorder 16, the splice portion of the photosensitive material roll 24 is detected. For example, in the case of the photosensitive material A (printing paper), long holes defined by JIS are formed, so that these long holes may be used for detecting the splice portion.

The cutter 34 of the printer 10b is usually designed so as to correspond to the thickness of a sheet of the photosensitive material A. Therefore, the cutter 34 cannot cut the splice portion (double overlapping portion) according to the above size (i.e., 127 mm). Therefore, the cutter 34 cuts the photosensitive material A into a sheet of a predetermined size which includes the splice portion with respect to the transport direction. This predetermined size is generally larger than the above-mentioned size.

Next, as in the above, the cut splice portion is sent to the sub-scanning transport roller pair 32, where the splice portion is irradiated with a modulated light beam L from the exposure unit 30 while being transported in the sub-scanning direction to thereby make a record indicating that this print is a splice portion (e.g., "this is not a product but a splice portion"). This record is preferably made in portions other than the long holes.

As in the roll forward end, the splice portion is subsequently developed in the development unit 38 and dried in the drying unit 40. In the packer 20b, as described above, the print P in the splice portion is handled as one order and is input into the packing sheet S to obtain the print pack 12, which is then discharged to the product storing unit 70. As in the above, the print pack 12 is treated as a print pack of broke.

Furthermore, in the case of a condition maintaining print (calibration print), it is also assumed that the width of the photosensitive material roll 24 is 89 mm and the feed length thereof is 127 mm. First, in the image recorder 16, the photosensitive material A is cut into the above-mentioned size with the cutter 34, and sent to the sub-scanning transport roller pair 32 as the condition maintaining print. Then, the condition maintaining print is irradiated with a modulated light beam L from the exposure unit 30 while being transported in the sub-scanning direction by the sub-scanning transport roller pair 32 to thereby record an image for the condition maintaining print, and a record indicating that this print P is a condition maintaining print (e.g., "this is not a product but a condition maintaining print") is made in a region of the photosensitive material A other than the image.

As in the above example, the condition maintaining print is subsequently developed in the development unit 38 and dried in the drying unit 40. In the packer 20b, the print P in the condition maintaining print is discharged to the product storage unit 70 as the print pack 12, and similarly treated as a print pack of broke.

In the above-mentioned various examples, although each of the packers 20, 20a, and 20b has the accumulating unit 56, the transport unit 58, and the input unit 60, the present invention is not limited thereto. For example, the packers 20, 20a, and 20b may include only the accumulating unit 56 and the input unit 60, without having the transport unit 58. In this case, the input unit 60 may be initially inclined downwardly along the transport path, or the input unit 60 may be configured so that it receives the print stack in a horizontal state, and is then inclined downwardly along the transport path thereby inputting the print stack into the packing sheet S.

Alternatively, the packers 20, 20a, and 20b may be configured to include only the input unit 60 so that it accumulates the prints P discharged through the output roller pair 50 in a horizontal state, and after having accumulated the prints P of one order, it is inclined downwardly along the transport path to input the print stack into the packing sheet S. In this case, it is preferable that the input unit 60 have means for aligning the accumulated prints P in the width direction, as the width shift guide 74 of the accumulating unit 56 in the illustrated example.

The packing apparatus and method of the present invention will be described below in detail based on the preferable examples shown in the attached drawings.

Next, a packing apparatus and a packing method according to a fifth aspect of the present invention will be described with reference to FIGS. 3, 5, and 13A to 19C.

FIG. 5 is also a schematic view of an example of a printer using an embodiment of the packing apparatus of the fifth aspect carrying out the packing method according to this aspect of the present invention.

A printer 10a shown in FIG. 5 includes, as described above, an image recorder 16, a processor 18, and a packer 20a that is an example of the packing apparatus of this aspect.

As described above, the packer 20a is a packing apparatus of this aspect, which accumulates and packs the prints P discharged from the processor 18 for each order. The packer 20a includes an accumulating unit 56, a transport unit 58, an input unit 60, a packing sheet supply unit 62 for a packing sheet S, opening holding means 64, a seal/cut unit 66, a print input load alleviating unit 68, and a product storage unit 70a.

The packer 20a shown in FIG. 5 is an example of the packing apparatus of this aspect carrying out the packing method of this aspect, and is also an example of the packing apparatus of the second aspect carrying out the packing method of the second aspect. Therefore, the similar description of the packer 20a will be omitted, and the description required for this aspect, in particular, the description of the print input load alleviating part will be mainly given.

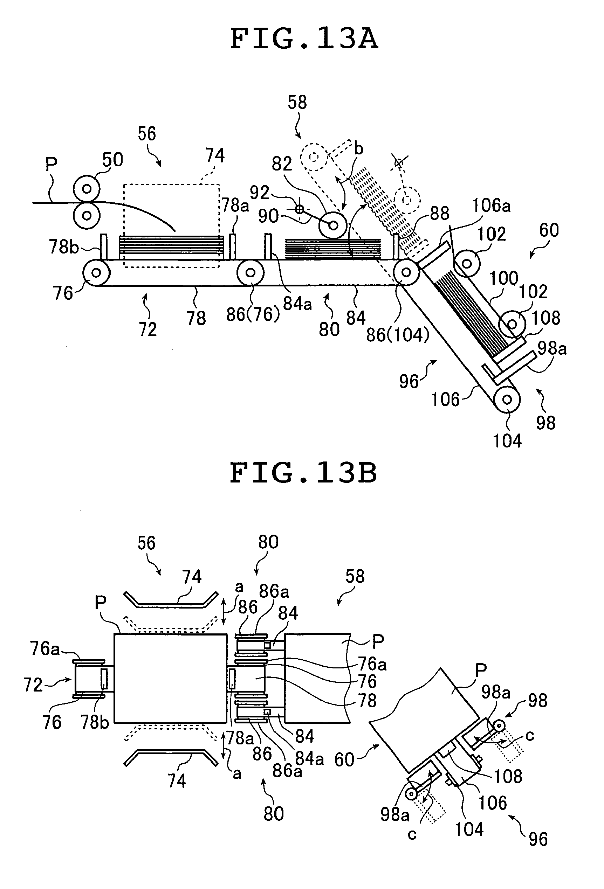

FIG. 13A and FIG. 13B are a front view and a plan view specifically showing schematic configurations of the accumulating unit 56, the transport unit 58, and the input unit 60, respectively.

Herein, the accumulating unit 56, the transport unit 58, and the input unit 60 in FIGS. 13A and 13B are shown in a different manner from the accumulating unit 56, the transport unit 58, and the input unit 60 shown in FIGS. 6A and 6B. However, they are basically configured in the same manner, so that the description required for this aspect will be mainly given, and the similar description will be omitted. Regarding the accumulating unit 56, the transport unit 58, and the input unit 60 shown in FIGS. 13A and 13B, in particular, regarding the accumulating unit 56, reference can be made to the accumulating unit 56, the transport unit 58, and the input unit 60 shown in FIGS. 2A and 2B, in particular, the accumulating unit 56.

It is appreciated that this aspect, more specifically, the embodiment shown in FIGS. 13A to 19C is also applicable to the packer 20 and the printer 10 shown in FIG. 1, the packer 20a and the printer 10a shown in FIG. 5, and the packer 20b and the printer 10b shown in FIG. 9.

Even in the accumulating unit 56, the transport unit 58, and the input unit 60 of the packer 20a of this aspect shown in FIGS. 13A and 13B, as in the examples shown in FIGS. 6A and 6B, and FIGS. 2A and 2B, after the print stack is transferred from the accumulating unit 56 to the transport unit 58, the transport unit 58 is inclined so that the transport path in the transport unit 58 is aligned with the transport path in the input unit 60, and the print stack is transported to the input unit 60 along a linear transport path by the downwardly inclined transport at the same inclination angle as that in the input unit 60. This configuration can prevent the print stack from being out of alignment or collapsing during its transport and enables the print stack to be input more reliably.

Furthermore, by aligning the transport unit 58 with the input unit 60 to form a linear transport path, the print stack is input into the packing sheet S from the input unit 60 subsequently to its transfer from the transport unit 58 to the input unit 60. This configuration enables the print stack to be input into the packing sheet S at a high speed without fail while its misalignment in the transport direction is suppressed.

As in the illustrated example, the configuration in which the transport unit 58 is provided between the accumulating unit 56 and the input unit 60 and the transport unit 58 is inclined to transport the print stack to the input unit 60 enables smooth and efficient print production, because immediately after the prints of one order are accumulated in the accumulating unit 56 and are transported to the transport unit 58, the prints P of the next order can be accumulated.

However, the packing apparatus of the present invention is not limited thereto, and the steps between the accumulation of the prints and their input may be performed with another configuration.

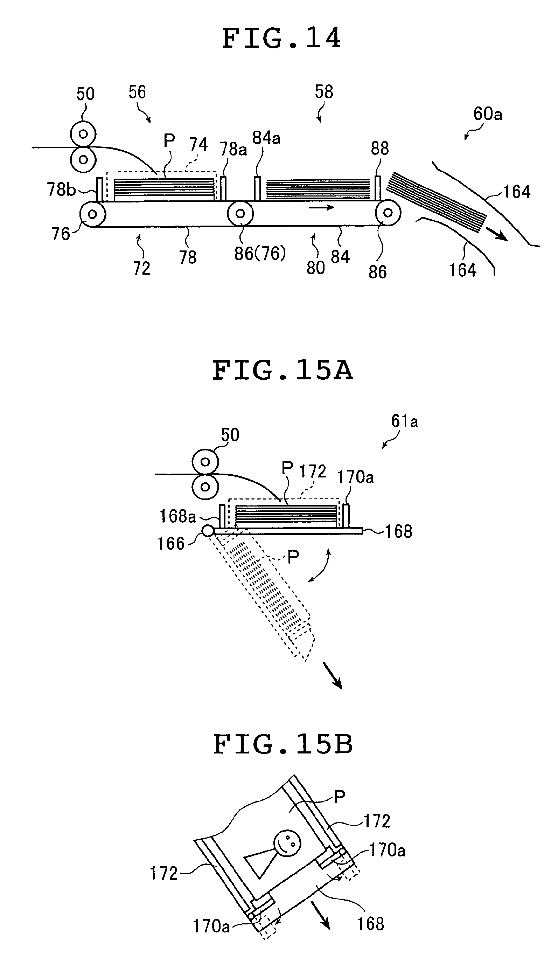

For example, as shown in FIG. 14, the input unit 60a may include guides 164 for guiding the print stack from the transport unit 58 to the slit d of the packing sheet S so that the print stack transported by the endless belt 84 of the transport unit 58 and pushed out by the pressing member 84a falls along the guides 164 to be input into the packing sheet S. It is preferable that the guides 164 be provided in vertical and horizontal directions of the transport path of the prints P to regulate the alignment of the prints. It is also preferable that the same shutter as that of the shutter 98 be provided at the forward ends of the guides 164, 164 to ensure the guiding of the print stack to the slit d of the packing sheet S. In the case where the prints P (photosensitive material A) are likely to be curled, it is also preferable to provide the curl pressing roller 102 described above.

The accumulating unit 56 may be followed by the input unit 60a having the guides 164, 164 without providing the transport unit 58 therebetween.

Furthermore, for example, as shown in FIGS. 15A and 15B, an accumulating/input unit 61a may be provided in place of the accumulating unit 56 for performing conveyer transport at a position where the prints P discharged through the output roller pair 50 of the processor 18 are received.

The accumulating/input unit 61a includes a placement platform 168 placed so as to receive the prints P discharged through the output roller pair 50, a shaft 166 for swingably supporting the end on the upstream side (processor 18 side) of the placement platform 168, a regulating member 168a provided on the upstream side of the upper surface of the placement platform 168 (i.e., the surface on which the prints P are placed), forward end doors 170a that are opened in a double-doored manner and are provided on both sides in the width direction on the downstream side, and width regulating guides 172 provided on both sides in the width direction.

As shown in FIG. 15A, after the accumulating/input unit 61a accumulates the prints P of one order with the placement platform 168 placed horizontally, the accumulating/input unit 61a inclines the placement platform 168 at a predetermined angle by turning the placement platform 168 on the shaft 166 to direct the end on the downstream side (forward end) to the slit d of the packing sheet S. Along with this, the accumulating/input unit 61a opens the forward end doors 170a to input the print stack on the placement platform 168 into the packing sheet S. As in the shutter 98 in the above-mentioned examples, it is preferable in this process that the forward ends of the forward end doors 170a be inserted in the slit d of the packing sheet S to function as guides, which ensures that the print stack is input into the packing sheet S.

It is also preferable that the width regulating guides 172 be configured in the same way as the width shift guides 74 in the above-mentioned examples. In this case, the shift in the width direction of the print stack can be minimized, and the print stack can be input into the packing sheet S without fail. The situation that the prints P in the print pack 12 are out of alignment in the width direction can be suppressed.

It is also preferable that the regulating member 168a on the upstream side (trailing edge side of the prints P) be made movable in the transport direction of the prints P so as to push out the trailing edge of the print stack at the time of input of the print stack. This embodiment suppresses the situation that the print stack is out of alignment in the transport direction, which ensures that the print stack is input into the packing sheet S at a high speed and the prints P are packed in the print pack 12 with reduced misalignment in the length direction.

In the case where the prints P of the subsequent order are accumulated while the prints P accumulated for the preceding order are input into the packing sheet S, the accumulating/input unit 61a may be placed instead of the transport unit 58 and the input unit 60 with the accumulating unit 56 in the example shown in FIGS. 5, 13A and 13B remaining unchanged. In this case, the prints P discharged through the output roller pair 50 are accumulated in the accumulating unit 56, and the accumulating/input unit 61a receives the print stack transferred from the accumulating unit 56 and inputs it into the packing sheet S.

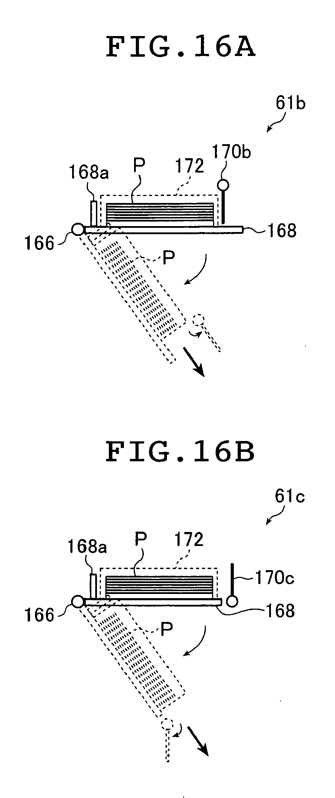

As shown in FIG. 16A, a forward end door 170b that is opened upward and extends in a height direction of the print stack from the surface of the placement platform 168 on which the prints are placed may be provided in place of the forward end doors 170a of the accumulating/input unit 61a that are opened in a double-doored manner. In the height direction, the forward end door 170b has a height equal to or larger than that of the print stack to be placed on the placement platform 168. A gap smaller than the thickness of one print P is provided between the forward end door 170b and the placement platform 168, or no gap is provided therebetween. Furthermore, in the width direction, the forward end door 170b may be provided only partially (only at the center or on both sides), or provided over the entire print width, as long as the fall of the print stack can be regulated.

The forward end door 170b may slide upward to be opened. However, in order for each print of the print stack to fall simultaneously, as in the illustrated example, it is preferable that the upper end of the forward end door 170b be connected swingably to a shaft fixed to the placement platform 168 so as to rotate upward to be opened.

When the prints P of one order are accumulated on the placement platform 168 or the print stack of one order is transferred from the upstream side, the accumulating/input part 61b inclines the placement platform 168 at a predetermined angle to direct the forward end thereof to the slit d of the packing sheet S, and then, opens the forward end door 170b to input the print stack into the packing sheet S.

As shown in FIG. 16B, the forward end door may be replaced by a tip end door 170c that is opened downward. To be more specific, the lower end of a door member similar to that of the forward end door 170b shown in FIG. 16A may be connected swingably to a shaft fixed to the forward end of the placement platform 168 so that the door member rotates downward to be opened.

Next, the print input load alleviating unit 68 that is a characteristic part of this aspect will be described.

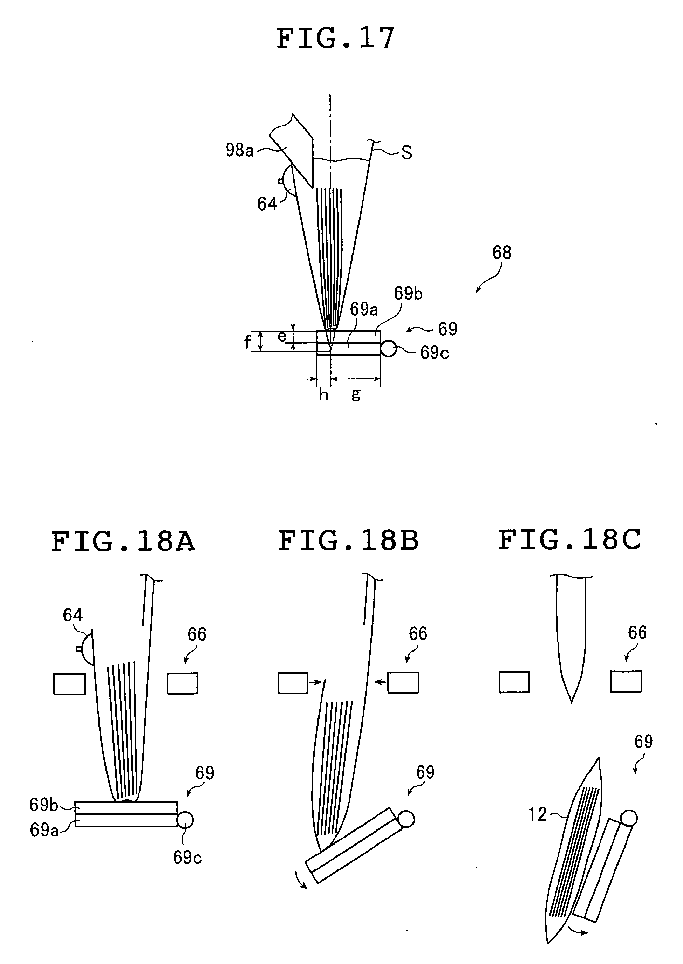

When the input unit 60 is to input the prints, the print input load alleviating unit 68 lifts up a lower portion (lower end) of a bag portion of the packing sheet S held by the holding means 64 to support the packing sheet S. FIG. 17 shows a schematic configuration of the print input load alleviating unit 68. The print input load alleviating unit 68 includes a print input load alleviating platform 69 having a base 69a, a shock absorbing member 69b, and a shaft 69c.

The base 69a is a plate having a width substantially equal to that of the packing sheet S, and on the top surface of the base 69a (the surface on which the packing sheet S is supported), the shock absorbing member 69b is provided. The base 69a is placed so that the surface of the shock absorbing member 69b is above the lower portion of the packing sheet S when it is held by the grab means 64a to be suspended. Thus, the print input load alleviating platform 69 lifts up and supports the bottom of the bag in which the prints are packed.

The shock absorbing member 69b prevents the prints P input into the packing sheet S from colliding with the base 69a to give damage to the edges of the prints P and also prevents the prints P from rebounding to cause the print stack to be out of alignment. Any elastic material can be used for the shock absorbing member 69b.

One side (the right side in the illustrated example) extending in the width direction of the base 69a is supported swingably by the shaft 69c. The base 69a is capable of swinging between a first position (represented by solid lines in FIG. 5) at which the base 69a supports the lower portion of the bag portion of the packing sheet S during the input of the prints, and a second position (represented by broken lines in FIG. 5) at which the base 69a releases the support of the bag portion of the packing sheet S after the prints have been input, and retracts from the transport path of the print pack 12.

If the print stack is input into the packing sheet S which is held by the holding means 64 with a print insertion port opened, and in which the portion below the position at which the means 64 holds is merely suspended, the prints that have fallen push the bottom of the bag portion downward to pull down the packing material (packing sheet S) forming the bag portion. Consequently, a force with which the bag contracts inward acts on the packing material to cause two sheets forming the packing material on the side surfaces to be close to each other, whereby the inside of the bag is narrowed to increase the friction force between the prints P and the packing material.

Furthermore, the friction force between the prints is smaller than that between the prints and the packing material. Therefore, when the print stack is input into the print packing bag of the packing sheet S, the speed at which the prints P in the uppermost and lowermost portions (two sheets on the outermost surfaces) are input becomes smaller than that at which the prints P therebetween are input. Consequently, prints in the center of a print bundle jump out to form a wedge shape, and the prints P stored in the print packing bag are spread out (out of alignment) in the insertion direction. Furthermore, the prints P are not inserted in the bag deeply enough and may be caught in the vicinity of the slit d that serves as the seal portion, or may get out of the print packing bag.

Such a problem is more serious when the interval between the slits d, i.e., the length of the print packing bag is set to be smaller. Furthermore, such a problem is more likely to occur as the number of the prints P to be packed increases.

In order to solve this problem, owing to the print input load alleviating unit 68 having been configured as described above, the packer of the present invention can input the print stack into the packing sheet S with its lower portion suspended to thereby prevent the rupture of the packing sheet S and alleviate the friction load between the prints P and the packing sheet S caused by the inputting operation of the prints P. Therefore, the print stack can be promptly inserted in the bag portion of the packing sheet S without fail without causing the print stack to be greatly out of alignment in the input direction. Furthermore, the print pack 12 of a compact size can be produced without using a long bag that is unnecessary for the size of the prints P. The completed print pack 12 of a compact size can prevent the prints P from being out of alignment inside the print pack 12, and the amount of the packing sheet S used can be suppressed.

In terms of the vertical position, the surface of the print input load alleviating platform 69 on which the packing sheet S is supported, i.e., the surface of the shock absorbing member 69b needs to be above the lowermost portion (lower end) of the packing sheet S that is held and suspended by the holding means 64.

The preferable range of the distance f (see FIG. 17) between the lowermost portion of the packing sheet S and the support surface of the print input load alleviating platform 69 varies depending upon the size and number of the prints P, the thickness of paper used for the prints P, and the like. For example, in the case where 1 to 101 photographic prints of printing paper with a size of 102 mm × 152 mm (postcard size) are packed in one print packing bag, in order to ensure the inside space of the packing sheet S during the input of the prints, it is preferable to set the distance f to be 5 mm or more.

If the distance f is too large, the length of the portion of the packing sheet S where the prints P are inserted becomes small to prevent the print stack from being neatly input into the packing sheet S and to cause the prints P to be caught in the print insertion port. Therefore, it is preferable to set the distance f to be 25 mm or less.

The preferable range of the depth of the surface on which the packing sheet S is supported, i.e., the depth (in a direction orthogonal to the width direction, that is, in the horizontal direction in FIG. 17) of the base 69a and the shock absorbing member 69b varies depending upon the size and number of the prints P, the kind of paper or the like used for the prints P, the speed and the angle at which the print is input, and the like. In the case where 1 to 101 photographic prints of printing paper with a size of 102 mm x 152 mm are packed in one print bag with the packer 20a of this embodiment, i.e., the packing apparatus in which the print stack is input into the packing sheet S by the input unit 60 inclined toward the print insertion port (slit d) of the packing sheet S at a speed at which the print stack free-falls or at a speed slightly higher than the free fall speed, the following range is preferable.

To be more specific, as shown in FIG. 17, the length h from the packing material center (represented by a center line in FIG. 17) to the input side (left side in FIG. 17) with the packing sheet S opened equally on the front and back sides (right and left sides in FIG. 17) in the depth direction is preferably set to be 10 mm or more. This range is efficient in reliably supporting the prints P inserted in the packing sheet S on the print input load alleviating platform 69.

Furthermore, the length g from the packing material center to the outer side (opposite to the input side) is preferably 70 mm or more. This range is efficient in reliably supporting the prints P on the print input load alleviating platform 69, even when the packing sheet S swings in the input direction (right direction in FIG. 17) due to the inertial force of the print stack input by the inclined input unit 60.

In this embodiment, a preferable example of the shock absorbing member 96b includes an ethylene propylene rubber (EPDM) sponge with a thickness e of 5 mm. In the case where the shock caused by inputting the print stack is small e.g., in the case where the weight of the print stack is small, or the input speed is small, the shock absorbing member 69b may not be provided.

As shown in FIG. 18A, when the print stack is input into the packing sheet S, the print input load alleviating platform 69 is in a stand-by state at the first position where the support surface is horizontal and supports the bottom of the packing sheet S during the input of the prints.

After the print input, as shown in FIG. 18B, the print input load alleviating platform 69 is inclined along with the downward movement of the packing sheet S with the grab means 64a of the holding means 64. When the slit d of the packing sheet S reaches the position at which the seal/cut unit 66 is located, the packing sheet S is sealed and cut. In this process, the print input load alleviating platform 69 is away from the packing sheet S or hardly supports the packing sheet S even if the print input load alleviating platform 69 is in contact therewith, and the prints aligned inside the packing sheet S reaches the bottom of the packing sheet S. Therefore, the prints P are not sandwiched in the sealed portion (in the vicinity of the slits d).

Thereafter, as shown in FIG. 18C, the print input load alleviating platform 69 further moves, and retracts (to the second position) from the path along which the print pack 12 obtained by the cutting operation in the seal/cut unit 66 falls to the product storage unit 70. Alternatively, the print input load alleviating platform 69 may be slightly inclined so that the print pack 12 is guided to the product storage unit 70 along its support surface.

The operation of the print input load alleviating platform 69 as described above may be synchronized with the feed of the packing sheet S which is caused by the movement of the grab means 64a and the feed of the packing sheet S which is caused by the transport roller pair 112 of the packing sheet supply unit 62. Thus, an excessive load on the packing sheet S and its excessive loosening are suppressed to enable each packing step to be performed appropriately.

In this embodiment, subsequently to the print input into the packing sheet S, the packing sheet S is sealed and cut at the position to which the packing sheet S is sent downward, and the packing sheet S is then discharged downward. Therefore, the print input load alleviating unit 68 uses the print input load alleviating platform 69 which is movable between the first position at which the lower end of the packing sheet S is supported and the second position to which the print input load alleviating platform 69 retracts from the transport path of the print pack 12. However, in the case where the discharge direction is horizontal, the print input load alleviating platform may move merely vertically between the print inputting position and the seal/cut position, by using any known drive means such as an air cylinder, a hydraulic cylinder, or a link mechanism. Alternatively, in the case of sealing the packing sheet S without lowering it, or discharging the packing sheet S from the print inputting position without sealing it, an immovable support platform may be used for the print input load alleviating unit 68.

In the above-mentioned example, the print input load alleviating platform 69 is allowed to rotate on one shaft (shaft 69c) to move between the horizontal first position and the second position inclined or vertical with respect to the first position. However, for example, in the case where an output port of the print pack 12 is provided on the side on which an operator operate the printer 10a shown in FIG. 5 (for example on the front side of the paper plane of FIG. 5 showing the printer 10a), it is preferable that the print input load alleviating platform 69 be allowed to rotate on two shafts to discharge the print pack 12 toward the front.

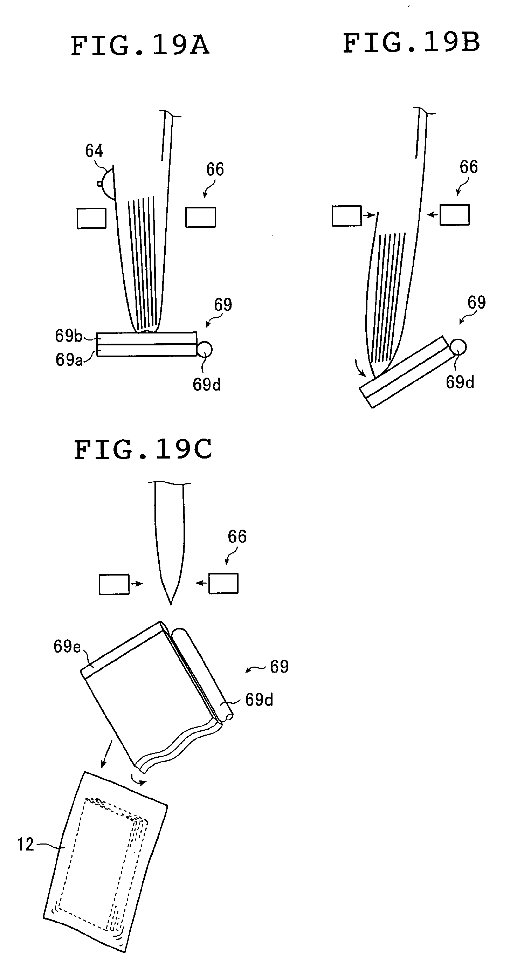

To be more specific, as shown in FIGS. 19A to 19C, the base 69a is supported by the shaft 69d for supporting rotatably the base 69a and the support surface of the shock absorbing member 69b so as to move them vertically, and the shaft 69e for rotating the support surface so that it is directed to the front side of the figure. The base 69a is allowed to move with respect to the shaft 69d from the print inputting position (at which the packing sheet S is supported) as shown in FIG. 19A to the position (sealing position) at which the packing sheet S is sealed as shown in FIG. 19B, and the base 69a is allowed to move with respect to the shaft 69e from the sealing position shown in FIG. 19B to the discharging position shown in FIG. 19C.

This configuration enables the print input load alleviating platform 69 to guide the print pack 12 to the discharge port on the front side of the apparatus.

Next, the function of the packer 20a in the printer 10a will be described.

As described above, the prints P are transported in the discharge unit 48 of the processor 18 and discharged through the output roller pair 50 to be accumulated in the accumulating unit 56 (on the conveyer 72). Furthermore, in the accumulating unit 56, the accumulated prints P are sandwiched between the width shift guides 74 at a predetermined timing, e.g., for each print, thereby aligning the prints P in the width direction.

In the packer 20a, when it is detected based on, for example, sort information that the prints P of one order (or the maximum number of prints that can be stored in the print pack 12) are accumulated in the accumulating unit 56, the conveyer 72 of the accumulating unit 56 and the conveyer 80 of the transport unit 58 are driven in synchronization to transport the print stack from the accumulating unit 56 to the transport unit 58.

When the print stack is transported to the transport unit 58, the curl pressing roller 82 moves downward to press the print stack from above so as to correct curls. Then, the roller 86 on the upstream side is lifted up to incline the conveyer 80 as represented by broken lines of FIG. 13A.

On the other hand, the packing sheet S is in a stand-by state in which the packing sheet S is suspended while the vicinity of the slit d is held by the grab means 64a and the slit d is opened by the opening means 64b. In this process, the lower end of the packing sheet S is supported on the print input load alleviating platform 69 of the print input load alleviating unit 68 so as to be slightly lifted up.

When the conveyer 80 of the transport unit 58 is aligned with the conveyer 96 of the input unit 60, the shutter 98 is opened, and then the conveyers 80 and 96 are driven in synchronization. Thus, the print stack is transported from the transport unit 58 to the input unit 60, which subsequently transports the print stack in the downwardly inclined direction to input the print stack into the packing sheet S through the opened slid d. In this process, owing to the opening of the shutter 98, at least the forward ends of the doors 98a of the shutter 98 are inserted in the packing sheet S, and the shutter 98 thus functions as a guide for inputting the print stack.

The method of transporting the print stack from the transport unit 58 to be input into the packing sheet S through the input unit 60 is not limited to the continuous transport as described above, but the print stack may be transported intermittently between the transport unit 58 and the input unit 60. For example, the following transporting method may be used: The transport unit 58 is inclined to transport the print stack from the transport unit 58 to the input unit 60, after which the transport in the input unit 60 (on the conveyer 96) is stopped at a time when the wall portion 108 comes to a predetermined position on the upstream side of the shutter 98, and the shutter 98 is opened; then, (or in synchronization), the transport on the conveyer 96 is restarted to input the print stack through the slit d of the packing sheet S.

During the inputting operation of the prints with the input unit 60, the bottom of the packing sheet S is supported by the print input load alleviating unit 68, and a space for print insertion is ensured in the bag portion of the packing sheet S. Therefore, the bag portion of the packing sheet S can be prevented from being pulled toward the bottom by the inserted prints P to be narrowed, and the speed at which the individual prints of the print stack are inserted into the packing sheet S can be also prevented from varying due the friction between the uppermost and lowermost prints P of the print stack and the packing sheet S. Thus, the situation that the print stack is not aligned or is out of alignment in the inputting direction can be suppressed. Furthermore, the print stack is supported by the print input load alleviating platform 69 so that its forward end in the inputting direction is aligned. The packing sheet S can also be prevented from being damaged by the shock during the inputting operation of the prints.

The print stack input by the input unit 60 collides with the print input load alleviating platform 69 of the print input load alleviating unit 68, when the print stack reaches the bottom of the packing sheet S. However, the shock is absorbed by the shock absorbing member 69b, so that the ends of the prints P can be prevented from being damaged. Upward rebounding of the prints P can also be suppressed, so that the situation that the prints P are out of alignment in the packing sheet S can be suppressed.

Thus, by providing the print input load alleviating unit 68, the print stack can be input into the sheet and neatly stacked without being out of alignment. Therefore, the prints can be stored reliably in a neatly stacked state even in a small packing material (bag) selected in accordance with the print size, the maximum storage number or the like.

When the print stack (prints P of one order) is put in the packing sheet S, the opening holding means 64 releases the packing sheet S (or further the fan is stopped). Then, the sheet roll 110 rotates to feed the packing sheet S to a position where the slit d reaches the seal/cut unit 66. At this time, the grab means 64a moves downward while holding the packing sheet S. The print input load alleviating platform 69 also moves downward away from the packing sheet S.

When the slit d moves to a predetermined position, the seal/cut unit 66 fuses and cuts the packing sheet S. Along with this, the grab means 64a releases the packing sheet S to obtain a completed product of the print pack 12 whose opening is sealed, and the completed product is stored in the product storage unit 70.

The packing apparatus, the print producing apparatus using the same, and the packing method according to the present invention have been described above in detail with reference to various embodiments. However, the present invention is not limited to these various embodiments, and various modifications and alterations may be made without departing from the spirit of the present invention.

For example, in the above examples, photographic prints produced by exposing a photosensitive material (printing paper) are packed to obtain a print pack. However, the present invention is not limited thereto. Various kinds of prints such as inkjet prints and electrophotographic prints can be packed to obtain print packs by applying the packing apparatus of the present invention to various types of printers such as an inkjet printer and an electrophotographic printer.

In the above embodiments, the prints are packed with a long packing sheet roll to obtain print packs. However, the packing material (print packing bag) used for packing the prints may be previously cut into a bag shape.

## Claims

1. A packing apparatus for packing prints for each order, comprising:
an accumulating unit for accumulating the prints having been output while regulating positions of the prints in a direction orthogonal to a transport direction to form a print stack of the prints to be packed for each order and horizontally transporting the print stack;
an input unit for transporting the print stack in a downwardly inclined direction and inputting the print stack in a packing material; and
sealing means for sealing the packing material accommodating the print stack.

2. The packing apparatus according to claim 1, wherein the print stack is supplied to said input unit through its transport in the downwardly inclined direction at an angle which is identical to or substantially identical to that at which the print stack is transported in said input unit.

3. The packing apparatus according to claim 1 or 2,
further comprising a transport unit for receiving the print stack to transport the print stack to said input unit between said accumulating unit and the input unit,
wherein said transport unit receives the print stack in a horizontal state, is inclined downward at an angle which is identical to or substantially identical to that at which the print stack is transported in said input unit, and transports the print stack in this state, thereby supplying the print stack to said input unit.

4. The packing apparatus according to any one of claims 1 to 3, wherein at least one of said transport unit and said input unit includes a curl correcting means for pressing the print stack from above in a stack direction, thereby correcting curls of the prints.

5. The packing apparatus according to any one of claims 1 to 4, wherein said accumulating unit regulates the positions of the prints by sandwiching the prints with guide plates moving in the direction orthogonal to the transport direction every time a predetermined number of prints are output.

6. The packing apparatus according to claim 5, wherein the predetermined number of prints is any one selected from the group consisting of 1 to 5.

7. A packing apparatus for packing prints for each order, comprising:
a print accumulating unit including:
an accumulating platform for accumulating the prints discharged from a print discharge section;
a pair of regulating members disposed on both sides in a width direction orthogonal to a print discharge direction from said print discharge section of said accumulating platform at an interval larger than a width of the prints and having a height exceeding an accumulation height of the prints accumulated on said accumulating platform;
bias means for biasing the regulating members to the prints with a force larger than a force for moving a predetermined number of the prints and smaller than a force for changing a shape of accumulated prints, when the regulating members come into contact with ends in the width direction of the prints accumulated on said accumulating platform; and
drive means for allowing at least one of said regulating members to reciprocate to a position where the prints accumulated on said accumulating platform are sandwiched by said pair of regulating members, every time the predetermined number of the prints are accumulated on said accumulating platform; and
a print insertion unit for transporting the prints of one order to be packed in one packing material to be formed into a print packing bag, accumulated in said print accumulating unit, in a direction orthogonal to the width direction, and inserting the prints of one order in the packing material.

8. The packing apparatus according to claim 7, wherein said drive means drives said pair of regulating members in synchronization so that said pair of regulating members sandwich the prints.

9. The packing apparatus according to claim 7 or 8, wherein said regulating members are capable of being inclined in a height direction thereof.

10. The packing apparatus according to any one of claims 7 to 9, wherein said bias means has, at a high position in the height direction, a bias force larger than that at a low position in the height direction.

11. The packing apparatus according to any one of claims 7 to 10, wherein:
said bias means has, in a portion for biasing a print stack of a predetermined intended number of the prints, a bias force smaller than a rigidity force in the width direction of the print stack of the intended number of the prints; and
said drive means starts driving said regulating members after the intended number of the prints are accumulated.

12. The packing apparatus according to any one of claims 7 to 11, wherein said drive means allows said regulating members to reciprocate to a position corresponding to a minimum width when the prints discharged from said print discharge section are deformed in the width direction or a width smaller than the minimum width.

13. The packing apparatus according to any one of claims 7 to 12, further comprising rotation means for rotating a direction of the prints by a predetermined angle before the print are inserted in the packing material.

14. A print producing apparatus, comprising:
an image forming apparatus for forming an image on a recording medium to produce prints; and
a packing apparatus according to any one of claims 1 to 13.

15. The print producing apparatus according to claim 14, wherein said image forming apparatus comprises:
exposure means for using a photosensitive material as the recording medium and exposing the photosensitive material;
development means for developing the photosensitive material after exposure in a wet method; and
drying means for drying the photosensitive material after development.

16. A packing method for packing prints for each order, comprising:
receiving the prints discharged from a print discharge section on an accumulating platform;
accumulating the prints while regulating positions in a width direction orthogonal to a print discharge direction from said print discharge section of the prints every time a predetermined number of the prints are discharged on said accumulating platform, by biasing the prints from ends on both sides in the width direction with a force larger than a force for moving the predetermined number of the prints and smaller than a force for changing a shape of the accumulated prints; and
transporting the accumulated prints of one order to be packed in one packing material to be formed into a print packing bag in a direction orthogonal to the width direction, and inserting the prints in the packing material.

17. The packing method according to claim 16, wherein a high position of an accumulation height of the prints is biased with a bias force larger than a low position of the accumulation height.

18. The packing method according to claim 16 or 17, wherein, after a predetermined intended number of the prints are accumulated, the bias of the prints is started with a bias force smaller than a rigidity force in the width direction of a stack of the intended number of the prints.

19. A packing apparatus for packing prints for each order, comprising:
transport means for transporting a print stack composed of stacked prints in a downwardly inclined direction to input it in a packing material;
pressing means for, when inputting the print stack in the packing material with said transport means, pressing the print stack from an upstream side in a transport direction at a speed equal to that of said transport means; and
sealing means for sealing the packing material storing the prints,
wherein said transport means transports the print stack in the downwardly inclined direction to input it in the packing material at a speed equal to or higher than a free fall speed of the print stack on said transport means.

20. The packing apparatus according to claim 19, wherein:
said transport means is a belt conveyer for transporting the print stack placed thereon; and
said pressing means is a pressing member erected on a belt of said belt conveyer.

21. The packing apparatus according to claim 19 or 20, wherein said transport means inputs the print stack in the packing material at a transport speed of 1 to 2000 mm/sec.

22. The packing apparatus according to any one of claims 19 to 21, wherein said transport means transports the print stack in the downwardly inclined direction at an angle of 45° to 90° to input it in the packing material.

23. A packing apparatus for packing prints for each order, comprising:
transport means for transporting a print stack of the prints in the downwardly inclined direction to put the print stack in a packing material;
a shutter disposed at a lower end of said transport means and having two doors each including a bottom for supporting the print stack from below and a side wall for regulating a position of the print stack in a direction orthogonal to a transport direction when opened, and closing a transport path of the print stack when closed; and
sealing means for sealing the packing material accommodating the print stack,
wherein said shutter opens/closes said doors in a double-doored manner, at least a tip end of said side wall of each door when opened have a shape whose height decreases gradually toward a downstream side in a transport direction, and said tip end of each door is inserted in the packing material when said shutter is opened.

24. The packing apparatus according to claim 23, wherein said tip end of said side wall of each door is tapered, and a taper angle is at least 30°.

25. The packing apparatus according to claim 23 or 24, wherein an upper end of a tapered region of said tip end of each door is ±15° with respect to a vertical direction when said shutter is opened.

26. The packing apparatus according to any one of claims 23 to 25, wherein said transport means transports the print stack in the downwardly inclined direction at an angle of 45° to 90° to input the print stack in a packing material.

27. A packing apparatus for packing prints for each order, comprising:
holding means for opening a print insertion port of a packing material to be formed into a print packing bag upward, and holding the packing material under a condition that the packing material hangs down;
input means for inputting accumulated prints to be packed in the packing material toward the print insertion port from above the packing material held by said holding means; and
support means for supporting the packing material from below under a condition of lifting up a lower end of the packing material held by said holding means and hanging down, at a time of input of the prints by said input means.

28. The packing apparatus according to claim 27, further comprising sealing means for sealing the print insertion port of the packing material.

29. The packing apparatus according to claim 28, wherein said support means includes a support platform for supporting the packing material, and inclines said support platform downward after sealing the print insertion port, thereby guiding the packing material in which the prints are packed to a discharge section.

30. The packing apparatus according to any one of claims 27 to 29, further comprising accumulating means for accumulating the prints while regulating positions in a direction orthogonal to a transport direction of the prints and transporting the accumulated prints to said input means after prints of one order to be packed in the packing material are accumulated.

31. A packing method for packing prints for each order, comprising:
opening a print insertion port of a packing material to be formed into a print packing bag upward, and holding the packing material under a condition that the packing material hangs down;
supporting the packing material from below under a condition of lifting up a lower end of the packing material held and hanging down; and
inputting accumulated prints to be packed in the packing material toward the print insertion port from above the packing material.

32. The packing method according to claim 31, wherein the print insertion port is sealed after the prints are input.

33. The packing method according to claim 32, wherein, after the print insertion port is sealed, a support platform for supporting the packing material is inclined downward to guide the packing material in which the prints are packed to a discharge section.

34. The packing method according to any one of claims 31 to 33, wherein:
the prints are accumulated while positions in a direction orthogonal to a transport direction of the prints are regulated; and
the accumulated prints are transported to an input position for inputting in the packing material after the prints of one order to be inserted in the packing material are accumulated.
